# EUROPEAN PATENT APPLICATION

(11) **EP 4 209 460 A1**
(43) Date of publication of application: **12.07.2023**
(21) Application number: 21864371.6
(22) Date of filing: 01.09.2021
(51) Int. Cl.: C01G 53/00, H01M 4/505, H01M 4/525

(54) **LITHIUM METAL COMPOSITE OXIDE, POSITIVE ELECTRODE FOR LITHIUM SECONDARY BATTERY, AND LITHIUM SECONDARY BATTERY**

(30) Priority: 04.09.2020 JP 2020149181
(71) Applicant: SUMITOMO CHEMICAL COMPANY, LIMITED, Tokyo 103-6020 (JP)
(72) Inventor: INOUE, Masashi, Niihama-shi, Ehime 792-8521 (JP)
(74) Representative: Vossius & Partner Patentanwälte Rechtsanwälte mbB
(86) International application number: PCT/JP2021/032134
(87) International publication number: WO 2022/050314

(57) **Abstract**

A lithium metal composite oxide having a layered structure, containing Li, Ni, and an element X, in which the element X is at least one element selected from the group consisting of Co, Mn, Fe, Cu, Ti, Mg, Al, W, Mo, Nb, Zn, Sn, Zr, Ga, B, Si, S, and P, Ni/(Ni + X), which is a ratio of the number of moles of Ni to the total number of moles of Ni and the element X, is 0.7 or more, and in a powder X-ray diffraction measurement of the lithium metal composite oxide using CuKa rays, a diffraction peak is present within a range of a diffraction angle 20 = 18.7 ± 1°, and a relative standard deviation of a volume-based crystallite size distribution calculated from the diffraction peak within the range of 2θ = 18.7 ± 1° is 0.20 or more and 0.55 or less.

## Description

### [Technical Field]

The present invention relates to a lithium metal composite oxide, a positive electrode for a lithium secondary battery, and a lithium secondary battery.

Priority is claimed on Japanese Patent Application No. 2020-149181, filed on September 4, 2020, the content of which is incorporated herein by reference.

### [Background Art]

A lithium metal composite oxide has been used as a positive electrode active material for a lithium secondary battery. Lithium secondary batteries have already been put into practical use not only for small-sized power sources in mobile phone applications, notebook personal computer applications, and the like but also for medium-sized or large-sized power sources in automotive applications, power storage applications, and the like.

In a lithium secondary battery using a lithium metal composite oxide as a positive electrode active material, various properties such as a charge and discharge efficiency and a cycle retention rate vary depending on the composition and crystal state of the lithium metal composite oxide. Therefore, research has been conducted on physical properties of the lithium metal composite oxide through which better performance can be achieved in a lithium secondary battery.

Patent Document 1 discloses a lithium-containing composite oxide having high contents of Li and Mn. Patent Document 1 discloses that, in order to suppress a decrease in charge and discharge capacity in a case where a charge and discharge cycle is repeated, a logarithmic standard deviation of a crystallite size distribution of the lithium containing composite oxide is 0.198 or less. The crystallite size distribution is obtained from a peak of a (003) plane in an X-ray diffraction pattern of the lithium containing composite oxide. The peak of the (003) plane is a peak attributed to a crystal structure of a space group R-3m.

### [Citation List]

### [Patent Document]

[Patent Document 1]
JP-A-2016-199414

### [Summary of Invention]

### [Technical Problem]

In order to increase the energy density of a positive electrode active material, use of a lithium metal composite oxide having a high Ni concentration as the positive electrode active material for a lithium secondary battery is anticipated. However, there is still more research to be done on how to control the crystallite size distribution of a lithium metal composite oxide having a high Ni concentration to achieve better performance in a lithium secondary battery.

The present invention has been made in view of the above-described circumstances, and an object of the present invention is to provide a lithium metal composite oxide that when used as a positive electrode active material for a lithium secondary battery enables a lithium secondary battery having a high initial charge and discharge efficiency and a low DC resistance in a low charged state to be achieved; and a positive electrode for a lithium secondary battery and a lithium secondary battery including the same.

### [Solution to Problem]

The present invention has the following aspects.
[1] A lithium metal composite oxide having a layered structure, containing:
   Li;
   Ni; and
   an element X,
   in which the element X is at least one element selected from the group consisting of Co, Mn, Fe, Cu, Ti, Mg, Al, W, Mo, Nb, Zn, Sn, Zr, Ga, B, Si, S, and P,
   Ni/(Ni + X), which is a ratio of the number of moles of Ni to the total number of moles of Ni and the element X, is 0.7 or more, and
   in a powder X-ray diffraction measurement of the lithium metal composite oxide using CuKα rays, a diffraction peak is present within a range of a diffraction angle 20 = 18.7 ± 1°, and a relative standard deviation of a volume-based crystallite size distribution calculated from the diffraction peak within the range of 2θ = 18.7 ± 1° is 0.20 or more and 0.55 or less.
[2] The lithium metal composite oxide according to [1],
   in which, with regard to a crystallite size distribution function curve obtained from the diffraction peak, in which a horizontal axis is a volume-based crystallite size and a vertical axis is a probability density function of a crystallite with respect to the crystallite size, in a region surrounded by the crystallite size distribution function curve and the horizontal axis, a proportion of an area of a portion in the region in which the crystallite size is 1,000 Å or less to a total area of the region is 0.5% or more and 50% or less.
[3] The lithium metal composite oxide according to [1] or [2],
   in which the lithium metal composite oxide is represented by a composition formula (I),

      Li[Liₓ(Ni_{(1-y-z)}Co_{y}M_{z})₁₋ₓ]O₂ (I)
   and in the formula (I), M represents at least one element selected from the group consisting of Mn, Fe, Cu, Ti, Mg, Al, W, Mo, Nb, Zn, Sn, Zr, Ga, B, Si, S, and P, and -0.1 ≤ x ≤ 0.2, 0 < y ≤ 0.2, 0 < z ≤ 0.2, and y + z ≤ 0.3 are satisfied.
[4] The lithium metal composite oxide according to any one of [1] to [3],
   in which a 50% cumulative volume particle size D₅₀ which is obtained from a volume-based cumulative particle size distribution curve measured by a laser diffraction scattering method is 5 µm or more and 30 µm or less.
[5] The lithium metal composite oxide according to [4],
   In which a ratio of a 90% cumulative volume particle size D₉₀ to a 10% cumulative volume particle size D₁₀, which are obtained from the cumulative particle size distribution curve, is 1.5 or more and 4 or less.
[6] The lithium metal composite oxide according to any one of [1] to [5],
   in which a tap density is 1.8 g/cc or more and 3.2 g/cc or less.
[7] A positive electrode for a lithium secondary battery, including:
   a positive electrode active material containing the lithium metal composite oxide according to any one of [1] to [6].
[8] A lithium secondary battery including:
   the positive electrode for the lithium secondary battery according to [7].

### [Advantageous Effects of Invention]

According to the present invention, it is possible to provide a lithium metal composite oxide that when used as a positive electrode active material for a lithium secondary battery enables a lithium secondary battery having a high initial charge and discharge efficiency and a low DC resistance in a low charged state to be achieved; and a positive electrode for a lithium secondary battery and a lithium secondary battery including the same.

### [Brief Description of Drawings]

FIG. 1 is a graph showing a crystallite size distribution function curve of a lithium metal composite oxide in one aspect of the present embodiment.
FIG. 2 is a schematic configuration view showing an example of the lithium secondary battery.
FIG. 3 is a schematic configuration view showing an example of the lithium secondary battery.
FIG. 4 is a schematic view showing a laminate including an all-solid-state lithium secondary battery according to the present embodiment.
FIG. 5 is a schematic view showing an entire configuration of the all-solid-state lithium secondary battery according to the present embodiment.

### [Description of Embodiments]

### <Definitions of terms>

Terms used in the present specification are defined as follows.

The term "LiMO" refers to a lithium metal composite oxide.

The term "CAM" refers to a positive electrode active material for a lithium secondary battery (cathode active material for a lithium secondary battery).

In the present specification, "Ni" refers to a nickel atom rather than a nickel metal. Similarly, "Co," "Li," and the like also refer to a cobalt atom, a lithium atom, and the like, respectively.

The term "powder" refers to an aggregation of fine particles. Therefore, the term "positive electrode active material powder" (CAM powder), which is a combination of the terms "powder" and "positive electrode active material" (positive electrode active material for a lithium secondary battery, CAM) refers to powdery CAM. A similar expression in which "powder" is attached to the name of substance also refers to a powdery form of the substance.

The term "primary particle" refers to a particle in which no grain boundary is apparent when the particle is observed in a visual field magnified 10000 times using a scanning electron microscope or the like.

The term "secondary particle" refers to a particle into which the primary particles aggregate. That is, the secondary particle is an aggregate of the primary particles.

In a case where a numerical range is expressed as, for example, "1 to 10 µm," it means a numerical range from 1 µm to 10 µm, including the lower limit value (1 µm) and the upper limit value (10 µm), that is, it means "1 µm or more and 10 µm or less."

### <Measurement method>

Values evaluated in the present specification are obtained by the following methods.

### [Cumulative volume particle size]

A "cumulative volume particle size" of each powder is measured by a laser diffraction scattering method. Specifically, an object to be measured, for example, 0.1 g of a CAM powder, is injected into 50 ml of a 0.2 mass% sodium hexametaphosphate aqueous solution to obtain a dispersion liquid in which the powder is dispersed. Next, a particle size distribution of the obtained dispersion liquid is measured using a laser diffraction scattering particle size distribution measuring device (for example, Microtrac MT3300EXII manufactured by MicrotracBEL Corp.) to obtain a volume-based cumulative particle size distribution curve.

In the obtained cumulative particle size distribution curve, a value of the particle size at the time of 10% cumulation from a finer particle side is a 10% cumulative volume particle size D₁₀ (µm), a value of the particle size at the time of 50% cumulation from the finer particle side is a 50% cumulative volume particle size D₅₀ (µm), and a value of the particle size at the time of 90% cumulation from the finer particle side is a 90% cumulative volume particle size D₉₀ (µm).

### [Composition analysis]

A composition of CAM can be analyzed, for example, using an inductively coupled plasma emission spectrometer (for example, SPS3000 manufactured by Seiko Instruments Inc.) after CAM is dissolved in hydrochloric acid.

### [Volume-based crystallite size distribution]

A volume-based crystallite size distribution of LiMO is determined from measurement results of a powder X-ray diffraction measurement of a LiMO powder using CuKα as a radiation source, in which a measurement range of a diffraction angle 2θ is set to 10° or more and 90° or less. The powder X-ray diffraction measurement is carried out using an X-ray diffractometer (Smart Lab manufactured by Rigaku Corporation).

Specifically, using analysis software (integrated powder X-ray analysis software Smart Lab Studio II), for a diffraction profile obtained by the powder X-ray diffraction measurement, analysis is performed with peak profiling settings (peak shape: fundamental parameter (FP) method, crystallite size distribution type: logarithmic normal distribution), thereby calculating a relative standard deviation (RSD) of a crystallite size distribution of a diffraction peak within a range of 2θ = 18.7 ± 1°.

Furthermore, from a crystallite size distribution view of the analysis software, a crystallite size distribution function curve with a total area of 1, in which a horizontal axis is a volume-based crystallite size and a vertical axis is a probability density function of a crystallite with respect to the crystallite size, is obtained.

From the crystallite size distribution function curve, in a region surrounded by the crystallite size distribution function curve and the horizontal axis, a proportion of an area of a portion in the region in which the crystallite size is 1,000 Å or less to the total area of the region is calculated.

### [Tap density]

A "tap density" of the LiMO powder is measured by a method in accordance with JIS R 1628-1997. Specifically, the LiMO powder is dropped as a measurement sample to fill a 20 cm³ measurement container after being passed through a sieve, the container fully filled with the measurement sample is capped, and a volume of the sample is read and calculated after repeating tapping 200 times with a stroke length of 50 mm.

### [Initial charge and discharge efficiency]

An "initial charge and discharge efficiency" of the lithium secondary battery using LiMO is a value measured by conducting a test under the following conditions using an R2032 type coin cell with a half-cell structure, containing LiMO as a positive electrode active material.

### <Initial charge and discharge test>

Counter electrode (negative electrode): lithium metal
Test temperature: 25 °C
Maximum charging voltage: 4.3 V, charging time: 8 hours, charging current: 0.2 CA, constant current constant voltage charging
Minimum discharging voltage: 2.5 V, constant current discharge

### [DC resistance]

A "DC resistance" of the lithium secondary battery using LiMO is measured in a low charged state. Specifically, the "DC resistance" is a value obtained by conducting a test under the following conditions using an R2032 type coin cell with a full-cell structure, containing LiMO as a positive electrode active material. The "low charged state" is defined as a state at a charging rate of 20%.

### <Conditions for DC resistance measurement in low charged state>

Counter electrode (negative electrode): graphite-particle-coated electrode foil (weight of graphite particles in coated electrode layer: 98%)
Test temperature: 25 °C

Pre-measurement treatment: discharge capacity at 1 CA in a voltage range of the upper limit voltage of 4.2 V and the lower limit voltage of 2.5 V is set as 100%, after being charged the coin cell to 4.2 V, being discharged at a constant current of 1 CA so that the remaining capacity of the coin cell is 20%. Furthermore, an open circuit voltage is measured while no current is applied to the coin cell after the pre-measurement treatment.

Measurement of DC resistance: constant currents of 2 mA, 4 mA, 8 mA, and 16 mA are applied to the coin cell after the pre-measurement treatment, a voltage value is measured 10 seconds after the start of current application, and a voltage drop ΔV with respect to the open circuit voltage is calculated. A DC resistance R of the coin cell is calculated from a linear function expression ΔV = R × ΔI of the voltage drop ΔV with respect to a current ΔI.

Hereinafter, the lithium metal composite oxide, the positive electrode for a lithium secondary battery, and the lithium secondary battery according to aspects of the present invention will be described. In a plurality of embodiments to be described below, preferable examples or conditions may be shared.

### <Lithium metal composite oxide>

The LiMO according to the present embodiment has a layered structure and contains Li, Ni, and an element X, in which the element X is at least one element selected from the group consisting of Co, Mn, Fe, Cu, Ti, Mg, Al, W, Mo, Nb, Zn, Sn, Zr, Ga, B, Si, S, and P, Ni/(Ni + X), which is a ratio of the number of moles of Ni to the total number of moles of Ni and the element X, is 0.7 or more, and in a powder X-ray diffraction measurement of the lithium metal composite oxide using CuKα rays, a diffraction peak is present within a range of a diffraction angle 20 = 18.7 ± 1°, and a relative standard deviation of a volume-based crystallite size distribution calculated from the diffraction peak within the range of 2θ = 18.7 ± 1° is 0.20 or more and 0.55 or less.

LiMO is a metal composite oxide containing Li, Ni, and an element X. The element X is at least one element selected from the group consisting of Co, Mn, Fe, Cu, Ti, Mg, Al, W, Mo, Nb, Zn, Sn, Zr, Ga, B, Si, S, and P. Ni/(Ni + X), which is a ratio of the number of moles of Ni to the total number of moles of Ni and the element X, is 0.7 or more. LiMO in which Ni/(Ni + X) is 0.7 or more can be used for a relatively large-capacity lithium secondary battery.

LiMO is represented by, for example, a composition formula (I).

Li[Liₓ(Ni_{(1-y-z)}Co_{y}M_{z})₁₋ₓ]O₂ (I)

In the formula (I), M represents at least one element selected from the group consisting of Mn, Fe, Cu, Ti, Mg, Al, W, Mo, Nb, Zn, Sn, Zr, Ga, B, Si, S, and P, and -0.1 ≤ x ≤ 0.2, 0 < y ≤ 0.2, 0 < z ≤ 0.2, and y + z ≤ 0.3 are satisfied.

From the viewpoint of obtaining a lithium secondary battery having a high cycle retention rate, x in the composition formula (I) is -0.1 or more, preferably -0.05 or more and more preferably more than 0. In addition, from the viewpoint of obtaining a lithium secondary battery having a higher initial coulombic efficiency, x in the composition formula (I) is 0.2 or less, preferably 0.08 or less and more preferably 0.06 or less.

The upper limit value and lower limit value of x can be randomly combined together. As the combination, x of -0.1 or more and 0.2 or less, x of -0.05 or more and 0.08 or less, and x of more than 0 and 0.06 or less are exemplary examples.

From the viewpoint of obtaining a lithium secondary battery having a low battery internal resistance, y in the formula (I) is more than 0, preferably 0.005 or more and more preferably 0.03 or more. y in the formula (I) is 0.2 or less, preferably 0.15 or less and more preferably 0.13 or less.

The upper limit value and lower limit value of y can be randomly combined together. As the combination, y of more than 0 and 0.2 or less, y of 0.005 or more and 0.15 or less, and y of 0.03 or more and 0.13 or less are exemplary examples.

From the viewpoint of obtaining a lithium secondary battery having a high cycle retention rate, a in the composition formula (I) is more than 0, preferably 0.01 or more and more preferably 0.02 or more. In addition, z in the formula (I) is 0.2 or less, preferably 0.19 or less and more preferably 0.18 or less.

The upper limit value and lower limit value of z can be randomly combined together. As the combination, z of 0 or more and 0.2 or less, y of 0.01 or more and 0.19 or less, and y of 0.02 or more and 0.18 or less are exemplary examples.

As described above, from the viewpoint of obtaining a lithium secondary battery having a high initial charge and discharge efficiency and a low DC resistance in a low charged state, y + z in the formula (I) is 0.3 or less, preferably 0.25 or less and more preferably 0.22 or less. The fact that y + z in the formula (I) is 0.3 or less means that Ni/(Ni + X), which is a ratio of the number of moles of Ni to the total number of moles of Ni and the element X, is 0.7 or more. y + z in the formula (I) is more than 0, preferably 0.01 or more and more preferably 0.02 or more. That is, Ni/(Ni + X) is less than 1, preferably 0.99 or less.

The upper limit value and lower limit value of y + z can be randomly combined together. As the combination, y + z of more than 0 and 0.3 or less, y + z of 0.01 or more and 0.25 or less, and y + z of 0.02 or more and 0.22 or less are exemplary examples. That is, as the combination of the upper limit value and lower limit value of Ni/(Ni + X), Ni/(Ni + X) of 0.7 or more and less than 1, Ni/(Ni + X) of 0.75 or more and 0.99 or less, and Ni/(Ni + X) of 0.8 or more and 0.98 or less are exemplary examples.

From the viewpoint of obtaining a lithium secondary battery having a high cycle retention rate, X is preferably at least one metal selected from the group consisting of Mn, Ti, Mg, Al, W, Nb, B, and Zr, and more preferably at least one metal selected from the group consisting of Mn, Al, W, Nb, B, and Zr.

In a powder X-ray diffraction measurement of LiMO using CuKα rays, a diffraction peak is present within a range of a diffraction angle 20 = 18.7 ± 1°, and a relative standard deviation of a volume-based crystallite size distribution calculated from the diffraction peak within the range of 2θ = 18.7 ± 1° is 0.20 or more and 0.55 or less.

LiMO is an aggregate of a plurality of particles. In other words, LiMO is in a powder form. The aggregate of a plurality of particles may include only the primary particles, may include only the secondary particles, or may be a mixture of the primary particle and the secondary particle.

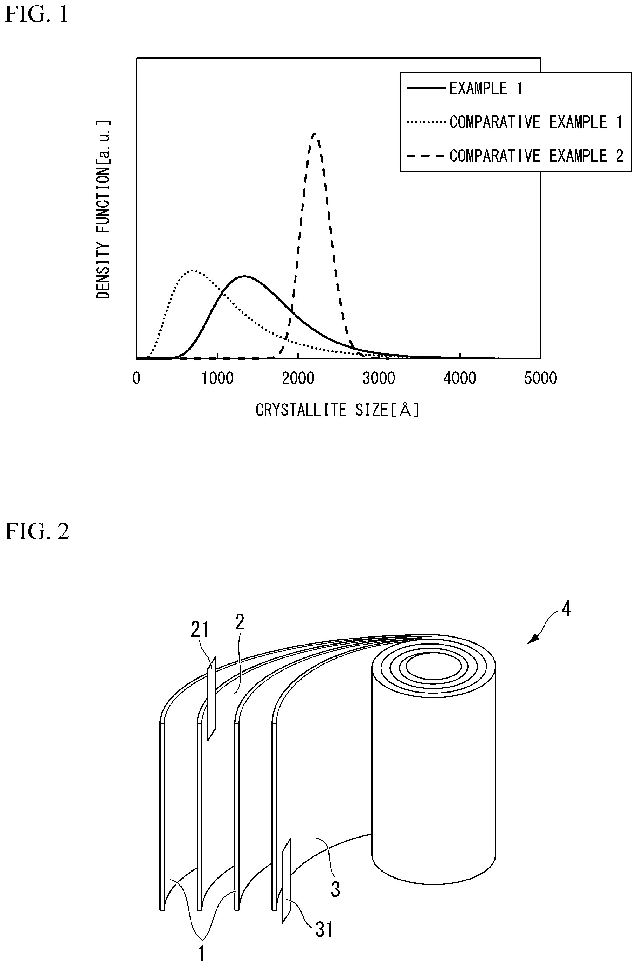

FIG. 1 is a graph showing an example of the crystallite size distribution function curve of LiMO.

The crystallite size distribution function is obtained by analyzing the diffraction peak obtained in the above-described method. The crystallite size distribution function indicates a correspondence relationship between the volume-based crystallite size and the probability density function of the crystallite with respect to the crystallite size.

The crystallite size distribution function curve is a curve indicating the crystallite size distribution function in which the horizontal axis is the volume-based crystallite size and the vertical axis is the probability density function of the crystallite with respect to the crystallite size. A solid curve shows the crystallite size distribution function curve of LiMO which satisfies the requirements of the present invention. Dashed or dotted curves show crystallite size distribution function curves of LiMO which does not satisfy the requirements of the present invention.

In a case where crystal growth of LiMO is insufficient, due to large variations in crystal growth, there is a wide range of crystallite sizes from large crystallite sizes to small crystallite sizes. Therefore, the relative standard deviation of the volume-based crystallite size distribution tends to increase. On the other hand, in a case where the crystal growth of LiMO progresses, a proportion of crystallites with small crystallite sizes decreases. Therefore, the above-described relative standard deviation tends to decrease.

In LiMO, the relative standard deviation of the volume-based crystallite size distribution is 0.20 or more and 0.55 or less, preferably 0.21 or more and 0.50 or less and more preferably 0.22 or more and 0.45 or less. In a case where the relative standard deviation of the crystallite size distribution is 0.20 or more and 0.55 or less, it is considered that LiMO has an appropriate crystallite distribution. In addition, in a case where the relative standard deviation of the crystallite size distribution is 0.20 or more and 0.55 or less, it is considered that crystallites having different size are appropriately dispersed in the secondary particles and primary particles of the positive electrode active material. In a case where the lithium secondary battery using such LiMO as a positive electrode active material is repeatedly charged and discharged, it is considered that expansion and contraction of the crystallite size of LiMO interact with each other among the plurality of crystallites, and strain generated throughout the secondary particles of LiMO is relaxed.

In the region surrounded by the crystallite size distribution function curve and the horizontal axis of the crystallite size distribution function curve, the proportion of the area of the portion in the region in which the crystallite size is 1,000 Å or less to the total area of the region is preferably 0.5% or more and 50% or less, more preferably 1% or more and 40% or less, and still more preferably 1.5% or more and 30% or less. In a case where the above-described proportion of the area is 0.5% or more and 50% or less and the above-described relative standard deviation is satisfied, it is considered that the crystal growth of LiMO progresses moderately, and LiMO has an appropriate crystallite size distribution as described above. In a lithium secondary battery using such LiMO as a positive electrode active material, a DC resistance value decreases in a low charged state, that is, at a charging rate of 20%.

A 50% cumulative volume particle size D₅₀ of LiMO is preferably 5 µm or more and 30 µm or less, more preferably 8 µm or more and 27 µm or less, and still more preferably 9 µm or more and 25 µm or less. In a case where D₅₀ is 5 µm or more and 30 µm or less, a bulk density of LiMO can be increased. In a case where CAM using such LiMO is used, a filling property of LiMO is improved. Therefore, a contact area between LiMO contained in the positive electrode and conductive material particles increases, and as a result, conductivity can be improved and the DC resistance of the lithium secondary battery can be reduced.

A ratio D₉₀/D₁₀ of a 90% cumulative volume particle size D₉₀ to a 10% cumulative volume particle size D₁₀ is preferably 1.5 or more and 4 or less, more preferably 1.7 or more and 3.8 or less, and still more preferably 2 or more and 3.5 or less. In a case where D₉₀/D₁₀ is 1.5 or more and 4 or less, LiMO contains moderately fine particles. Therefore, in a case where CAM using such LiMO is used, insertion and desorption of lithium ions into the LiMO particles by a charge and discharge reaction of the battery is promoted to improve the initial charge and discharge efficiency.

A tap density of the LiMO powder is preferably 1.8 g/cc or more and 3.2 g/cc or less, more preferably 2.1 g/cc or more and 3.1 g/cc or less, and still more preferably 2.3 g/cc or more and 3.0 g/cc or less. In a case where CAM (CAM powder) using the LiMO powder in which the tap density is 1.8 g/cc or more and 3.2 g/cc or less, the contact area between LiMO contained in the positive electrode and the conductive material particles increases, and as a result, the conductivity can be improved and the DC resistance of the lithium secondary battery can be reduced.

A crystal structure of LiMO is a layered structure, and preferably a hexagonal crystal structure or a monoclinic crystal structure.

The hexagonal crystal structure belongs to any one space group selected from the group consisting of P3, P3₁, P3₂, R3, P-3, R-3, P312, P321, P3₁12, P3₁21, P3₂12, P3₂21, R32, P3m1, P31m, P3c1, P31c, R3m, R3c, P-31m, P-31c, P-3m1, P-3c1, R-3m, R-3c, P6, P6i, P6s, P6₂, P6₄, P6₃, P-6, P6/m, P6₃/m, P622, P6₁22, P6₅22, P6₂22, P6₄22, P6₃22, P6mm, P6cc, P6₃cm, P6₃mc, P-6m2, P-6c2, P-62m, P-62c, P6/mmm, P6/mcc, P6₃/mcm, and P6₃/mmc.

In addition, the monoclinic crystal structure belongs to any one space group selected from the group consisting of P2, P2₁, C2, Pm, Pc, Cm, Cc, P2/m, P2i/m, C2/m, P2/c, P2i/c, and C2/c.

Among these, in order to obtain a lithium secondary battery having a high discharge capacity, the crystal structure is particularly preferably a hexagonal crystal structure belonging to the space group R-3m or a monoclinic crystal structure belonging to C2/m.

### <Method for producing lithium metal composite oxide>

An example of a method for producing LiMO will be described below. The method for producing LiMO includes at least a step of producing a metal composite oxide, a step of mixing the metal composite oxide with a lithium compound, and a step of calcining the mixture of the lithium compound and the metal composite oxide.

### (1) Method for producing metal composite oxide

Hereinafter, a method for producing a metal composite oxide containing Ni, Co, and Al as an element M will be described below as an example.

As a precursor of the metal composite oxide, a metal composite hydroxide containing Ni, Co, and Al is prepared. Usually, the metal composite hydroxide can be produced by a known batch-type co-precipitation method or continuous co-precipitation method.

Specifically, a nickel salt solution, a cobalt salt solution, an aluminum salt solution, and a complexing agent are reacted by the continuous co-precipitation method described in JP-A-2002-201028, thereby producing a metal composite hydroxide represented by Ni_{(1-y-z)}Co_{y}Al_{z}(OH)₂ (in the formula, 0 < y ≤ 0.2, 0 < z ≤ 0.2, and y + z ≤ 0.3 are satisfied).

A nickel salt which is a solute of the above-described nickel salt solution is not particularly limited, and, for example, at least one of nickel sulfate, nickel nitrate, nickel chloride, and nickel acetate can be used.

As a cobalt salt which is a solute of the above-described cobalt salt solution, for example, at least one of cobalt sulfate, cobalt nitrate, cobalt chloride, and cobalt acetate can be used.

As an aluminum salt which is a solute of the above-described manganese salt solution, for example, at least one of aluminum sulfate, aluminum nitrate, and aluminum chloride can be used.

The above-described metal salts are used in proportions corresponding to the above-described compositional ratio of Ni_{(1-y-z)}Co_{y}Al_{z}(OH)₂. That is, an amount of each metal salt is specified so that the molar ratio of Ni, Co, and Al in a mixed solution containing the above-described metal salts corresponds to (1 - y - z):y:z in the composition formula (I) of LiMO. By adjusting the molar ratio of Ni, Co, and Al in the mixed solution containing the above-described metal salts, Ni/(Ni + X) of finally produced LiMO can be controlled to be 0.7 or more. In addition, as a solvent, water is used.

The complexing agent is capable of forming a complex with a nickel ion, a cobalt ion, and an aluminum ion in an aqueous solution, and ammonium ion donors (ammonium hydroxide, ammonium sulfate, ammonium chloride, ammonium carbonate, ammonium fluoride, and the like), hydrazine, ethylenediaminetetraacetic acid, nitrilotriacetic acid, uracildiacetic acid, and glycine are exemplary examples.

In the step of producing the metal composite hydroxide, the complexing agent may or may not be used. Regarding the amount of the complexing agent which is contained in the mixed solution containing the nickel salt solution, the cobalt salt solution, or the aluminum salt solution, and the complexing agent, for example, a molar ratio of the complexing agent to the sum of the number of moles of the metal salts (the nickel salt, the cobalt salt, and the aluminum salt) is more than 0 and 2.0 or less.

In the co-precipitation method, in order to adjust the pH value of the mixed solution containing the nickel salt solution, the cobalt salt solution, the aluminum salt solution, and the complexing agent, an alkali metal hydroxide is added to the mixed solution before the pH of the mixed solution changes from alkaline to neutral. The alkali metal hydroxide is, for example, sodium hydroxide or potassium hydroxide.

The value of pH in the present specification is defined as a value measured when the temperature of the mixed solution is 40 °C. The pH of the mixed solution is measured when the temperature of the mixed solution sampled from a reaction vessel reaches 40 °C. In a case where the sampled mixed solution is lower than 40 °C, the mixed solution is heated up to 40 °C and the pH is measured. In a case where the sampled mixed solution exceeds 40 °C, the mixed solution is cooled to 40 °C and the pH is measured.

In a case where the complexing agent in addition to the nickel salt solution, the cobalt salt solution, and the aluminum salt solution described above is continuously supplied to the reaction vessel, Ni, Co, and Al react with each other to form Ni_{(1-y-z)}Co_{y}Al_{z}(OH)₂.

During the reaction, the temperature of the reaction vessel is controlled within a range of, for example, 20 °C or higher and 80 °C or lower, preferably 30 °C or higher and 70 °C or lower.

In addition, during the reaction, the pH value in the reaction vessel is controlled, for example, within a range of pH 9 or more and pH 13 or less. In a case where the pH value is within the above-described range, it is easy to uniformly control the reaction occurring in the reaction vessel, so that crystals of the obtained metal composite hydroxide are easily grown, and a metal composite hydroxide having a high bulk density is easily obtained. By using such a metal composite hydroxide, a LiMO powder having a desired tap density is easily obtained.

A reaction precipitate formed in the reaction vessel is neutralized under stirring. A time for the neutralization of reaction precipitate is, for example, 1 hour or more and 20 hours or less.

As the reaction vessel which is used in the continuous co-precipitation method, an overflow type reaction vessel can be used to separate the formed reaction precipitate.

In a case where the metal composite hydroxide is produced by the batch-type co-precipitation method, as the reaction vessel, a reaction vessel not equipped with an overflow pipe, a device having a mechanism in which a condensation tank connected to the overflow pipe is provided and a reaction precipitate that has overflown is condensed in the condensation tank and circulated to the reaction vessel again, and the like are exemplary examples.

A continuous reaction vessel is preferably used for the co-precipitation method. The metal composite hydroxide obtained by the continuous co-precipitation method contains particles with a small particle size, and D₉₀/D₁₀ of the metal composite hydroxide tends to be large. By using such a metal composite hydroxide, it is easier to obtain LiMO having particle sizes D₁₀, D₅₀, and D₉₀ within the desired ranges. By controlling the reaction conditions of the metal composite hydroxide by the co-precipitation method, the content of the particles with a small particle size contained in the obtained metal composite hydroxide is controlled, and the particle sizes D₁₀, D₅₀, and D₉₀ of LiMO can be controlled.

Various gases, for example, an inert gas such as nitrogen, argon, and carbon dioxide, an oxidizing gas such as air or oxygen, or a mixed gas thereof may be supplied into the reaction vessel.

After the above-described reaction, the neutralized reaction precipitate is isolated. For the isolation, for example, a method in which a slurry containing the reaction precipitate (that is, a co-precipitate slurry) is dehydrated by centrifugation, suction filtration, or the like is used.

The isolated reaction precipitate is washed, dehydrated, dried, and sieved, and the metal composite hydroxide containing Ni, Co, and Al is obtained.

The reaction precipitate is preferably washed with water or an alkaline washing liquid. The reaction precipitate is more preferably washed with an alkaline washing liquid, and more preferably washed with a sodium hydroxide aqueous solution. In addition, the reaction precipitate may be washed using a washing liquid containing a sulfur element. As the washing liquid containing the sulfur element, a sulfate aqueous solution of potassium or sodium, or the like is an exemplary example.

Next, the metal composite hydroxide is heated to produce a metal composite oxide. Specifically, the metal composite hydroxide is heated at 400 °C or higher and 700 °C or lower. A plurality of heating steps may be carried out as necessary. The heating temperature in the present specification is a set temperature of a heating device. In the case of having a plurality of heating steps, the heating temperature is a temperature when the metal composite hydroxide is heated at the highest retention temperature among individual heating steps.

The heating temperature is preferably 400 °C or higher and 700 °C or lower and more preferably 450 °C or higher and 680 °C or lower. In the case of 400 °C or higher and 700 °C or lower, the metal composite hydroxide is sufficiently oxidized, and a metal composite oxide having an appropriate BET specific surface area is obtained. In a case where the heating temperature is lower than 400 °C, there is a concern that the metal composite hydroxide may not be sufficiently oxidized. In a case where the heating temperature exceeds 700 °C, there is a concern that the metal composite hydroxide may be excessively oxidized and the BET specific surface area of the metal composite oxide may be too small.

As the time for retaining the above-described heating temperature, 0.1 hours or longer and 20 hours or shorter is an exemplary example, and 0.5 hours or longer and 10 hours or shorter is preferable. The heating rate up to the above-described heating temperature is, for example, 50 °C/hr or more and 400 °C/hr or less, and the temperature decrease rate from the above-described heating temperature to room temperature is, for example, 10 °C/hr or more and 400 °C/hr or less. In addition, as the heating atmosphere, it is possible to use air, oxygen, nitrogen, argon, or a mixed gas thereof.

The inside of the heating device may be under an appropriate oxygen-containing atmosphere. The oxygen-containing atmosphere may be a mixed gas atmosphere of an inert gas and an oxidizing gas, or may be a state in which an oxidizing agent is present in an inert gas atmosphere. In a case where the inside of the heating device is an appropriate oxygen-containing atmosphere, a transition metal which is contained in the metal composite hydroxide is appropriately oxidized, and it is easier to control a form of the metal composite oxide.

As oxygen or the oxidizing agent in the oxygen-containing atmosphere, a sufficient number of oxygen atoms need to be present in order to oxidize the transition metal.

The oxygen-containing atmosphere can be controlled by a method such as passing the oxidizing gas into the reaction vessel and bubbling the oxidizing gas into the mixed solution.

As the oxidizing agent, it is possible to use a peroxide such as hydrogen peroxide, a peroxide salt such as permanganate, perchloric acid, hypochlorous acid, nitric acid, a halogen, ozone, or the like.

Through the steps described above, the metal composite oxide can be produced. By using the obtained metal composite oxide, a dehydration reaction of the metal composite oxide is less likely to occur in a pre-calcination stage that will be described later, and the reaction between the metal composite oxide and the lithium compound proceeds easily. Therefore, by using the metal composite oxide obtained through the above-described steps, in the subsequent steps, it is easy to obtain LiMO in which the relative standard deviation of the volume-based crystallite size distribution falls within the desired range.

### (2) Mixing of metal composite oxide with lithium compound

The present step is a step of mixing the metal composite oxide with a lithium compound.

The above-described metal composite oxide is dried and mixed with a lithium compound. After drying the metal composite oxide, the metal composite oxide may be appropriately classified.

As the lithium compound to be used, it is possible to use at least one of lithium carbonate, lithium nitrate, lithium acetate, lithium hydroxide anhydride, lithium hydroxide monohydrate, lithium oxide, lithium chloride, and lithium fluoride. Among these, lithium hydroxide monohydrate is preferable. In a case where lithium hydroxide monohydrate is used as the lithium compound, it is considered that, in a heating process of the calcination step that will be described later, latent heat of the reaction associated with desorption of hydrated water can uniformly control the temperature rise of a calcined product, and can uniformly control the crystal growth of LiMO. That is, it is possible to obtain LiMO in which the relative standard deviation of the volume-based crystallite size distribution is 0.20 or more and 0.55 or less.

In the present step, the lithium compound and the metal composite oxide are mixed in consideration of a compositional ratio of a final target product. For example, the lithium compound and the metal composite oxide are mixed at a proportion corresponding to the compositional ratio of the composition formula (I) described above. A molar ratio of the amount of Li to the total amount 1 of the metal atoms contained in the metal composite oxide is preferably 1.00 or more, more preferably 1.02 or more, and particularly preferably 1.05 or more.

### (3) Calcining of mixture of metal composite oxide and lithium compound

The present step is a step of calcining the mixture of the lithium compound and the metal composite oxide obtained in the mixing step described above.

### (Calcining conditions)

The calcination step preferably has a plurality of calcination stages which are carried out at different calcining temperatures. For example, it is preferable to have a pre-calcination stage with a maximum temperature of lower than 700 °C and a main-calcination stage with a maximum temperature of 700 °C or higher. The pre-calcination stage may have a plurality of calcination stages with different calcining temperatures and calcining times in a range in which the maximum temperature is lower than 700 °C. The main-calcination stage may have a plurality of calcination stages with different calcining temperatures and calcining times in a range in which the maximum temperature is 700 °C or higher. In the present specification, the maximum temperature of the atmosphere inside a calcining furnace is referred to as the calcining temperature.

The calcining temperature (maximum temperature) in the pre-calcination stage is 400 °C or higher, preferably 500 °C or higher and lower than 700 °C and more preferably 600 °C or higher and 690 °C or lower. In a case where the calcining temperature in the pre-calcination stage is 400 °C or higher, it is possible to obtain LiMO having a strong crystal structure. In addition, in a case where the calcining temperature in the pre-calcination stage is lower than 700 °C, cycle characteristics of the lithium secondary battery are less likely to deteriorate even in a case where LiMO contains a high concentration of Ni.

The calcining temperature (maximum temperature) in the main-calcination stage is 700 °C or higher, preferably 710 °C or higher and 850 °C or lower and more preferably 710 °C or higher and 800 °C or lower. In a case where the calcining temperature in the main-calcination stage is 700 °C or higher, it is possible to obtain LiMO having a strong crystal structure. In addition, in a case where the calcining temperature is 850 °C or lower, the cycle characteristics of the lithium secondary battery are less likely to deteriorate even in a case where LiMO contains a high concentration of Ni. In addition, it is possible to reduce volatilization of lithium on surfaces of the secondary particles contained in LiMO.

A retention time of the maximum temperature in the pre-calcination stage (in the case of a plurality pre-calcination stages, the total time of each of the retention times) is preferably 1 hour or longer and 8 hours or shorter, more preferably 1.2 hours or longer and 4 hours or shorter, and particularly preferably 1.5 hours or longer and 3 hours or shorter.

A retention time in the main-calcination stage (in the case of a plurality main-calcination stages, the total time of each of the retention times) is preferably 1 hour or longer and 5.5 hours or shorter, more preferably 1.2 hours or longer and 5 hours or shorter, and particularly preferably 1.5 hours or longer and 4 hours or shorter.

In a case where the retention time in the pre-calcination stage is 1 hour or longer and 8 hours or shorter and the retention time in the main-calcination stage is 1 hour or longer and 5.5 hours or shorter, the lithium is less likely to volatilize, and moderate crystal growth can be achieved. By controlling the retention times in the pre-calcination stage and the main-calcination stage within the above-described ranges, it is possible to adjust the above-described proportion of the area of the portion in which the crystallite size is 1,000 Å or less in the crystallite size distribution function curve to be 0.5% or more and 50% or less.

A heating rate in the main-calcination stage is preferably 400 °C/hr or more, more preferably 450 °C/hr or more, still more preferably 500 °C/hr or more, and particularly preferably 600 °C/hr or more. In a case where the heating rate is increased, the above-described relative standard deviation of the volume-based crystallite size distribution of LiMO tends to increase, and in a case where the heating rate is 400 °C/hr or more, it is easier to obtain LiMO in which the above-described relative standard deviation of the volume-based crystallite size distribution is 0.20 or more.

By appropriately combining the heating rate and the retention time of the maximum temperature in the main-calcination stage within the above-described ranges, it is easier to obtain LiMO in which the above-described relative standard deviation of the volume-based crystallite size distribution is 0.20 or more and 0.55 or less. The calcining rate in the pre-calcination stage is not limited to the above-described range.

### (Calcining device)

A calcining device used in the pre-calcination stage may be either a static calcining furnace or a fluidized calcining furnace.

On the other hand, a calcining device used in the main-calcination stage is a fluidized calcining furnace. In the fluidized calcining furnace, an object itself to be calcined is put into the calcining furnace. Therefore, it is easy to heat the object to be calcined to a desired temperature in a short time, and it is easy to control the heating rate. In addition, in the fluidized calcining furnace, since the entire object to be calcined is calcined while being continuously stirred, variations in crystal growth can be suppressed without excessively increasing the maximum temperature of the main-calcination stage (for example, 800 °C). As a result, the relative standard deviation of the volume-based crystallite size distribution of finally produced LiMO can be controlled within the range of 0.20 or more and 0.55 or less.

In the case of using the static calcining furnace, the object to be calcined is calcined in a container such as a sheath. In this case, heat of a calcining atmosphere is transferred to the object to be calcined from a surface of the object to be calcined, in contact with the calcining atmosphere, toward an inside of the object to be calcined. Therefore, the object to be calcined tends to have a different thermal history between the inside of the container (that is, a portion away from a wall of the container) and the surface of the object to be calcined (that is, a portion in contact with the calcining atmosphere), and the degree of crystal growth differs, resulting in uneven crystal growth. As a result, the distribution of the crystallite size of LiMO obtained by the calcination tends to increase.

As the static calcining furnace, a roller hearth kiln, a shuttle kiln, a pusher kiln, or a batch type calcining furnace can be used.

As the fluidized calcining furnace, a rotary kiln or a fluidized-bed calcining furnace can be used. As the fluidized calcining furnace, a rotary kiln is preferably used. The rotary kiln is a device that feeds out the material to be processed by rotating a furnace tube, which has a supply port for the material to be processed at one end and has a discharge port for the material to be processed at the other end, while giving a predetermined inclination angle. By heating the furnace tube, the material to be processed, supplied to the inside of the furnace tube, can be calcined.

The furnace tube is cylindrical and rotatable around an axis thereof. An inner wall of the furnace tube is preferably made of a material having corrosion resistance to the lithium compound such as lithium hydroxide in the maximum temperature range of the pre-calcination stage and the main-calcination stage described above. A heater is provided as a heating unit on an outer edge of the furnace tube. One heater may be provided, or a plurality of heaters may be provided.

As the calcining atmosphere in the furnace tube, air, oxygen, nitrogen, argon, a mixed gas thereof, or the like is used depending on a desired composition. The calcining atmosphere is preferably an oxygen atmosphere, and in this case, it is preferable to introduce oxygen gas into the furnace tube. The gas introduced into the furnace tube is particularly preferably oxygen gas (that is, an oxygen concentration of the gas introduced is 100 vol%), but the gas may be a mixed gas of nitrogen or air, and oxygen, in which the oxygen concentration is 70 vol% or more and less than 100 vol% with respect to the volume of the mixed gas. The oxygen concentration of the above-described mixed gas is preferably 75 vol% or more and less than 100 vol%, and more preferably 80 vol% or more and 99 vol% or less.

The mixture of the metal composite oxide and the lithium compound may be calcined in the presence of an inert melting agent. The inert melting agent may remain in LiMO after calcination or may be removed by washing LiMO with a washing liquid or the like. It is preferable that the calcined LiMO be washed with pure water, an alkaline washing liquid, or the like. As the alkaline washing liquid, the above-described alkaline washing liquid can be used.

The inert melting agent which can be used is not particularly limited as long as the inert melting agent does not easily react with the mixture during the calcination. As the inert melting agent, at least one selected from the group consisting of a fluoride of at least one element selected from the group consisting of Na, K, Rb, Cs, Ca, Mg, Sr, and Ba (hereinafter, referred to as "M1"), a chloride of M1, a carbonate of M1, a sulfate of M1, a nitrate of M1, a phosphate of M1, a hydroxide of M1, a molybdate of M1, and a tungstate of M1 are exemplary examples.

In a case where the mixture is calcined in the presence of the inert melting agent, the calcining temperature may be set in consideration of the melting point of the inert melting agent, which will be described below, and is preferably set in a range of [melting point of inert melting agent - 200 °C] or higher and [melting point of inert melting agent + 200 °C] or lower.

As the fluoride of M1, NaF (melting point: 993 °C), KF (melting point: 858 °C), RbF (melting point: 795 °C), CsF (melting point: 682 °C), CaF₂ (melting point: 1402 °C), MgF₂ (melting point: 1263 °C), SrF₂ (melting point: 1473 °C), and BaF₂ (melting point: 1355 °C) can be exemplary examples.

As the chloride of M1, NaCl (melting point: 801 °C), KCl (melting point: 770 °C), RbCl (melting point: 718 °C), CsCl (melting point: 645 °C), CaCl₂ (melting point: 782 °C), MgCl₂ (melting point: 714 °C), SrCl₂ (melting point: 857 °C), and BaCl₂ (melting point: 963 °C) can be exemplary examples.

As the carbonate of M1, Na₂CO₃ (melting point: 854 °C), K₂CO₃ (melting point: 899 °C), Rb₂CO₃ (melting point: 837 °C), Cs₂CO₃ (melting point: 793 °C), CaCO₃ (melting point: 825 °C), MgCO₃ (melting point: 990 °C), SrCO₃ (melting point: 1497 °C), and BaCO₃ (melting point: 1380 °C) can be exemplary examples.

As the sulfate of M1, Na₂SO₄ (melting point: 884 °C), K₂SO₄ (melting point: 1069 °C), Rb₂SO₄ (melting point: 1066 °C), Cs₂SO₄ (melting point: 1005 °C), CaSO₄ (melting point: 1460 °C), MgSO₄ (melting point: 1137 °C), SrSO₄ (melting point: 1605 °C), and BaSO₄ (melting point: 1580 °C) can be exemplary examples.

As the nitrate of M1, NaNO₃ (melting point: 310 °C), KNO₃ (melting point: 337 °C), RbNO₃ (melting point: 316 °C), CsNO₃ (melting point: 417 °C), Ca(NO₃)₂ (melting point: 561 °C), Mg(NO₃)₂, Sr(NO₃)₂ (melting point: 645 °C), and Ba(NO₃)₂ (melting point: 596 °C) can be exemplary examples.

As the phosphate of M1, Na₃PO₄, K₃PO₄ (melting point: 1340 °C), Rb₃PO₄, Cs₃PO₄, Ca₃(PO₄)₂, Mg₃(PO₄)₂, (melting point: 1184 °C), Sr₃(PO₄)₂ (melting point: 1727 °C), and Ba₃(PO₄)₂ (melting point: 1767 °C) can be exemplary examples.

As the hydroxide of M1, NaOH (melting point: 318 °C), KOH (melting point: 360 °C), RbOH (melting point: 301 °C), CsOH (melting point: 272 °C), Ca(OH)₂ (melting point: 408 °C), Mg(OH)₂ (melting point: 350 °C), Sr(OH)₂ (melting point: 375 °C), and Ba(OH)₂ (melting point: 853 °C) can be exemplary examples.

As the molybdate of M1, Na₂MoO₄ (melting point: 698 °C), K₂MoO₄ (melting point: 919 °C), Rb₂MoO₄ (melting point: 958 °C), Cs₂MoO₄ (melting point: 956 °C), CaMoO₄ (melting point: 1520 °C), MgMoO₄ (melting point: 1060 °C), SrMoO₄ (melting point: 1040 °C), and BaMoO₄ (melting point: 1460 °C) can be exemplary examples.

As the tungstate of M1, Na₂WO₄ (melting point: 687 °C), K₂WO₄, Rb₂WO₄, Cs₂WO₄, CaWO₄, MgWO₄, SrWO₄, and BaWO₄ can be exemplary examples.

Two or more kinds of these inert melting agents can also be used. In the case of using two or more kinds thereof, there is also a case where the melting point decreases. In addition, among these inert melting agents, as an inert melting agent for obtaining LiMO having higher crystallinity, any of the carbonate of M1, the sulfate of M1, and the chloride of M1, or a combination thereof is preferable. In addition, M1 is preferably any one or both of sodium (Na) and potassium (K). That is, among the above-described inert melting agents, a particularly preferred inert melting agent is at least one selected from the group consisting of NaOH, KOH, NaCl, KCl, Na₂CO₃, K₂CO₃, Na₂SO₄, and K₂SO₄.

K₂CO₃ or K₂SO₄ is preferably used as the inert melting agent.

The amount of the inert melting agent used during the calcination may be appropriately adjusted. Regarding the amount of the inert melting agent used during the calcination, the amount of the inert melting agent with respect to the total amount of the lithium compound and the inert melting agent is preferably 0.010 mol% or more and 20 mol% or less, more preferably 0.015 mol% or more and 10 mol% or less, and still more preferably 0.020 mol% or more and 5 mol% or less.

By calcining the mixture of the metal composite oxide and the lithium compound as described above, LiMO can be produced.

The LiMO obtained as described above may be appropriately crushed. LiMO can be crushed using, for example, a mortar, a disk mill, a pin mill, a jet mill, a ball mill, or the like. A crushing time is preferably, for example, 10 minutes or longer and 2 hours or shorter.

The inert melting agent remaining on the crushed LiMO may be washed. For the washing, pure water or an alkaline washing liquid can be used. As the alkaline washing liquid, for example, aqueous solutions of at least one anhydride selected from the group consisting of lithium hydroxide, sodium hydroxide, potassium hydroxide, lithium carbonate, sodium carbonate, potassium carbonate, and ammonium carbonate, and aqueous solutions of a hydrate thereof can be exemplary examples. In addition, as an alkali, it is also possible to use ammonia.

The temperature of the washing liquid used for the washing is preferably 15 °C or lower, more preferably 10 °C or lower, and still more preferably 8 °C or lower. In a case where the temperature of the washing liquid is controlled within the above-described range to an extent that the washing liquid does not freeze, it is possible to suppress excessive elution of lithium ions from the crystal structure of LiMO into the washing liquid during the washing.

As a method for bringing the washing liquid and LiMO into contact with each other in the washing, a method in which LiMO is injected into an aqueous solution of each washing liquid and stirred is an exemplary example. In addition, a method in which the aqueous solution of each washing liquid is sprayed to LiMO as shower water may also be used. Furthermore, a method in which LiMO is injected into the aqueous solution of the washing liquid and stirred, LiMO is separated from the aqueous solution of each washing liquid, and then the aqueous solution of each washing liquid is sprayed to the separated LiMO as shower water may also be used.

In the washing, it is preferable to bring the washing liquid and LiMO into contact with each other for an appropriate range of time. "Appropriate time" in the washing refers to a time long enough to disperse each particle of LiMO while removing the inert melting agent remaining on the surface of LiMO. A washing time is preferably adjusted depending on the aggregation state of LiMO. The washing time is particularly preferably, for example, in a range of 5 minutes or longer and 1 hour or shorter.

After the washing of LiMO, it is preferable to further perform a heat treatment on LiMO. The temperature or method for carrying out the heat treatment on LiMO is not particularly limited, but from the viewpoint that it is possible to prevent a decrease in charge capacity, it is preferably 100 °C or higher, more preferably 130 °C or higher, and still more preferably 150 °C or higher. In addition, the upper limit temperature is not particularly limited, but as long as the crystallite size distribution obtained in the calcination step is not affected, it is preferably 700 °C or lower and more preferably 600 °C or lower. The amount of lithium volatilized can be controlled through the heat treatment temperature.

The upper limit value and lower limit value of the heat treatment temperature can be randomly combined together. For example, the heat treatment temperature is preferably 100 °C or higher and 700 °C or lower, more preferably 130 °C or higher and 600 °C or lower, and still more preferably 150 °C or higher and 400 °C or lower.

As the atmosphere during the heat treatment, an oxygen atmosphere, an inert atmosphere, a reduced pressure atmosphere, or a vacuum atmosphere is an exemplary example. In a case where the heat treatment is performed after the washing in the above-described atmosphere, a reaction between LiMO and moisture or carbon dioxide in the atmosphere is suppressed during the heat treatment, and LiMO containing few impurities can be obtained.

### <Positive electrode active material for lithium secondary battery>

CAM according to the present embodiment contains LiMO produced by the above-described method. In CAM, a content proportion of LiMO to the total mass (100 mass%) of CAM is preferably 90 mass% or more and 100 mass% or less, and more preferably 90 mass% or more and 99 mass% or less. As a substance other than LiMO contained in CAM, carbon black is an exemplary example.

### <Lithium secondary battery>

Next, a configuration of a lithium secondary battery which is suitable in a case where LiMO is used as a positive electrode active material will be described. Furthermore, a positive electrode for a lithium secondary battery which is suitable in a case where LiMO is used as a positive electrode active material (and may be referred to hereinafter as a positive electrode) will be described. Furthermore, a lithium secondary battery which is suitable for an application of the positive electrode will be described.

An example of the lithium secondary battery which is suitable in a case where LiMO is used as a positive electrode active material has a positive electrode, a negative electrode, a separator interposed between the positive electrode and the negative electrode, and an electrolyte solution disposed between the positive electrode and the negative electrode.

An example of the lithium secondary battery has a positive electrode, a negative electrode, a separator interposed between the positive electrode and the negative electrode, and an electrolyte solution disposed between the positive electrode and the negative electrode.

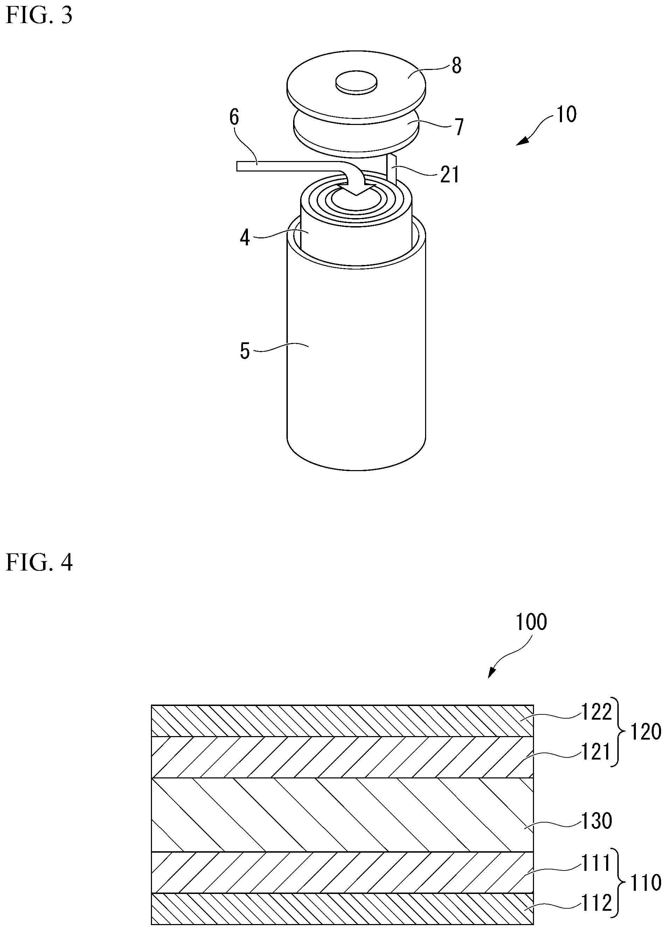

FIG. 2 and FIG. 3 are schematic views showing an example of the lithium secondary battery. The cylindrical lithium secondary battery 10 in FIGS. 2 and 3 is produced as follows.

First, as shown in FIG. 2, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3, and are wound to form an electrode group 4.

Next, as shown in FIG. 3, the electrode group 4 and an insulator (not shown) are accommodated in a battery can 5, and a can bottom is sealed. The electrode group 4 is impregnated with an electrolyte solution 6, and an electrolyte is disposed between the positive electrode 2 and the negative electrode 3. Furthermore, an upper portion of the battery can 5 is sealed with a top insulator 7 and a sealing body 8, whereby the lithium secondary battery 10 can be produced.

As a shape of the electrode group 4, for example, a columnar shape in which the cross-sectional shape is a circle, an ellipse, a rectangle, or a rectangle with rounded corners in a case where the electrode group 4 is cut in a direction perpendicular to a winding axis can be an exemplary example.

In addition, as the shape of the lithium secondary battery having such an electrode group 4, a shape that is specified by IEC60086, which is a standard for batteries specified by the International Electrotechnical Commission (IEC), or by JIS C 8500 can be adopted. For example, shapes such as a cylindrical shape and a square shape can be exemplary examples.

Furthermore, the lithium secondary battery is not limited to the above-described winding-type configuration, and may have a lamination-type configuration of a laminated structure in which the positive electrode, the separator, the negative electrode, and the separator are repeatedly stacked. As the lamination-type lithium secondary battery, a so-called coin-type battery, button-type battery, or paper-type (or sheet-type) battery can be an exemplary example.

Hereinafter, the respective components will be described.

### (Positive electrode)

The positive electrode can be produced by, first, preparing a positive electrode material mixture containing a positive electrode active material, a conductive material, and a binder, and supporting the positive electrode material mixture with a positive electrode current collector.

### (Conductive material)

As the conductive material in the positive electrode, a carbonaceous material can be used. Examples of the carbonaceous material include a graphite powder, a carbon black (such as acetylene black) and a fibrous carbonaceous material.

A proportion of the conductive material in the positive electrode material mixture is preferably 5 parts by mass or more and 20 parts by mass or less with respect to 100 parts by mass of the positive electrode active material. In the case of using a fibrous carbonaceous material such as a graphitized carbon fiber or a carbon nanotube as the conductive material, it is also possible to decrease the proportion thereof.

### (Binder)

As the binder in the positive electrode, a thermoplastic resin can be used. As the thermoplastic resin, polyimide resins; fluororesins such as polyvinylidene fluoride (which may be referred to hereinafter as PVdF) and polytetrafluoroethylene; polyolefin resins such as polyethylene and polypropylene, and the resins described in WO 2019/098384A1 or US2020/0274158A1 can be exemplary examples.

Two or more of these thermoplastic resins may be used in a mixture form. In a case where a fluororesin and a polyolefin resin are used as the binder, a proportion of the fluororesin to the entire positive electrode material mixture is set to 1 mass% or more and 10 mass% or less, and a proportion of the polyolefin resin is set to 0.1 mass% or more and 2 mass% or less, whereby it is possible to obtain a positive electrode material mixture having both a high adhesive force to the positive electrode current collector and a high bonding force inside the positive electrode material mixture.

### (Positive electrode current collector)

As the positive electrode current collector in the positive electrode, a strip-shaped member formed of a metal material such as Al, Ni, or stainless steel as a forming material can be used. Among these, from the viewpoint of making the positive electrode current collector easy to process and inexpensive, a positive electrode current collector which is formed of A1 and has a thin film shape is preferable.

As the method for supporting the positive electrode material mixture with the positive electrode current collector, a method in which the positive electrode material mixture is formed by pressurization on the positive electrode current collector is an exemplary example. In addition, the positive electrode material mixture may be supported with the positive electrode current collector by preparing a paste of the positive electrode material mixture using an organic solvent, applying and drying the paste of the positive electrode material mixture to be obtained on at least one surface side of the positive electrode current collector, and fixing the positive electrode material mixture by pressing.

As the organic solvent which can be used in the case of preparing the paste of the positive electrode material mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (which may be referred to hereinafter as NMP) are exemplary examples.

As the method for applying the paste of the positive electrode material mixture on the positive electrode current collector, a slit die coating method, a screen coating method, a curtain coating method, a knife coating method, a gravure coating method, and an electrostatic spraying method are exemplary examples.

The positive electrode can be produced by the method mentioned above.

### (Negative electrode)

The negative electrode included in the lithium secondary battery is not particularly limited as long as it is capable of doping and de-doping lithium ions at a potential lower than the positive electrode, and examples thereof include an electrode comprising a negative electrode current collector having supported thereon a negative electrode mix including a negative electrode active material, and an electrode constituted solely of a negative electrode active material.

### (Negative electrode active material)

As the negative electrode active material in the negative electrode, a carbonaceous material, a chalcogen compound (oxide, sulfide, or the like), a nitride, metals, or alloys that allow lithium ions to be doped or de-doped at a potential lower than the positive electrode are exemplary examples.

As the carbonaceous material which can be used as the negative electrode active material, graphite such as natural graphite or artificial graphite, cokes, carbon black, pyrolytic carbons, carbon fibers, and organic macromolecular compound-sintered bodies can be exemplary examples.

As oxides which can be used as the negative electrode active material, oxides of silicon represented by a formula SiOₓ (wherein x is a positive real number) such as SiO₂ and SiO; oxides of tin represented by a formula SnOₓ (wherein x is a positive real number) such as SnO₂ and SnO; and metal composite oxides containing lithium and titanium or vanadium such as Li₄Ti₅O₁₂ and LiVO₂ can be exemplary examples.

In addition, as the metal which can be used as the negative electrode active material, lithium metal, silicon metal, tin metal, and the like can be exemplary examples.

As the material which can be used as the negative electrode active material, the materials described in WO 2019/098384A1 or US2020/0274158A1 may be used.

These metals and alloys can be mainly used alone as an electrode after being processed into, for example, a foil shape.

Among the above-described negative electrode active materials, the carbonaceous material containing graphite such as natural graphite or artificial graphite as a main component is preferably used for the reason that the potential of the negative electrode rarely changes (potential flatness is favorable) from an uncharged state to a fully charged state during charging, the average discharging potential is low, the capacity retention rate at the time of repeatedly charging and discharging the lithium secondary battery is high (the cycle characteristics are favorable), and the like. A shape of the carbonaceous material may be, for example, any of a flaky shape such as natural graphite, a spherical shape such as mesocarbon microbeads, a fibrous shape such as a graphitized carbon fiber, or an aggregate of fine powder.

The negative electrode material mixture may contain a binder as necessary. As the binder, thermoplastic resins can be exemplary examples, and specifically, PVdF, thermoplastic polyimide, carboxymethylcellulose (which may be referred to hereinafter as CMC), styrene-butadiene rubber (which may be referred to hereinafter as SBR), polyethylene, and polypropylene can be exemplary examples.

### (Negative electrode current collector)

As the negative electrode current collector in the negative electrode, a strip-shaped member formed of a metal material such as Cu, Ni, or stainless steel as a forming material can be exemplary examples. Among these, a negative electrode current collector that is formed of Cu and has a thin film shape is preferable since the negative electrode current collector does not easily produce an alloy with lithium and is easy to process.

As a method for supporting the negative electrode material mixture by the negative electrode current collector, similar to the case of the positive electrode, a method in which the negative electrode material mixture is formed by pressurization and a method in which a paste of the negative electrode material mixture is prepared using a solvent or the like, applied and dried on the negative electrode current collector, and then the negative electrode material mixture is compressed by pressing are exemplary examples.

### (Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

In order to favorably transmit the electrolyte while the battery is in use (while the battery is charged and discharged), an air resistance of the separator by the Gurley method specified by JIS P 8117 is preferably 50 sec/100 cc or more and 300 sec/100 cc or less and more preferably 50 sec/100 cc or more and 200 sec/100 cc or less.

In addition, a porosity of the separator is preferably 30 vol% or more and 80 vol% or less and more preferably 40 vol% or more and 70 vol% or less with respect to the total volume of the separator. The separator may be a laminate of separators having different porosities.

### (Electrolyte solution)

The electrolyte solution in the lithium secondary battery contains an electrolyte and an organic solvent.

As the electrolyte contained in the electrolyte solution, lithium salts such as LiClO₄, LiPF₆, and LiBF₄ are exemplary examples, and a mixture of two or more thereof may be used. In addition, the electrolytes described in WO 2019/098384A1 or US2020/0274158A1 may be used. Among these, as the electrolyte, at least one selected from the group consisting of LiPF₆, LiAsF₆, LiSbF₆, LiBF₄, LiCF₃SO₃, LiN(SO₂CF₃)₂, and LiC(SO₂CF₃)₃, which contain fluorine, is preferably used.

As the organic solvent contained in the electrolyte solution, for example, propylene carbonate, ethylene carbonate, dimethyl carbonate, diethyl carbonate, ethyl methyl carbonate, and the organic solvents described in WO 2019/098384A1 or US2020/0274158A1 can be used.

As the organic solvent, two or more of these are preferably mixed and used, and a solvent mixture of a cyclic carbonate and a non-cyclic carbonate and a mixed solvent of a cyclic carbonate and ethers are more preferable. As the mixed solvent of a cyclic carbonate and a non-cyclic carbonate, a mixed solvent containing ethylene carbonate, dimethyl carbonate, and ethyl methyl carbonate is preferable.

In addition, as the electrolyte solution, it is preferable to use an electrolyte solution containing a lithium salt containing fluorine such as LiPF₆ and an organic solvent having a fluorine substituent to enhance the safety of the lithium secondary battery to be obtained.

### <All-solid-state lithium secondary battery>

Next, a positive electrode for which LiMO according to an aspect of the present invention is used as a positive electrode active material for an all-solid-state lithium secondary battery and an all-solid-state lithium secondary battery having this positive electrode will be described while describing the configuration of the all-solid-state lithium secondary battery.

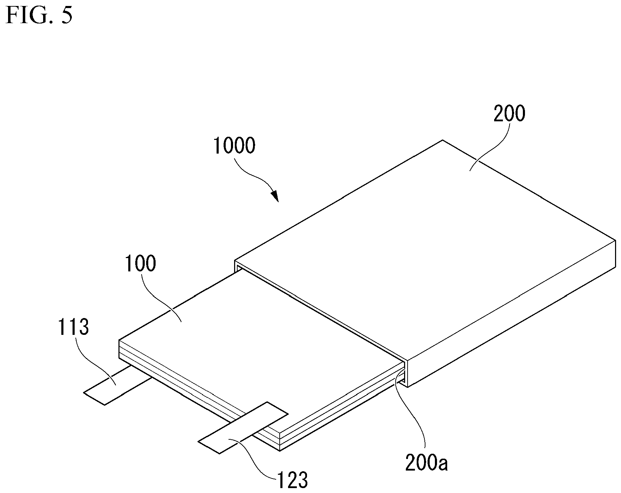

FIG. 4 and FIG. 5 are schematic views showing an example of the all-solid-state lithium secondary battery. The all-solid-state lithium secondary battery 1000 shown in FIG. 4 and FIG. 5 has a laminate 100 having a positive electrode 110, a negative electrode 120, and a solid electrolyte layer 130, and an exterior body 200 accommodating the laminate 100. In addition, the all-solid-state lithium secondary battery 1000 may have a bipolar structure in which a positive electrode active material and a negative electrode active material are disposed on both sides of a current collector. As specific examples of the bipolar structure, for example, the structures described in JP-A-2004-95400 are exemplary examples. A material which configures each member will be described below.

The laminate 100 may have an external terminal 113 which is connected to a positive electrode current collector 112 and an external terminal 123 which is connected to a negative electrode current collector 122. In addition, the all-solid-state lithium secondary battery 1000 may have a separator between the positive electrode 110 and the negative electrode 120.

The all-solid-state lithium secondary battery 1000 further has an insulator (not shown) which insulates the laminate 100 and the exterior body 200 from each other and a sealant (not shown) which seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium secondary battery 1000, for example, shapes such as a coin type, a button type, a paper type (or a sheet-type), a cylindrical type, a square shape, and a laminate type (pouch type) can be exemplary examples.

As an example of the all-solid-state lithium secondary battery 1000, a form in which one laminate 100 is provided is shown in the drawings, but the present embodiment is not limited thereto. The all-solid-state lithium secondary battery 1000 may have a configuration in which the laminate 100 is used as a unit cell and a plurality of unit cells (laminates 100) are sealed inside the exterior body 200.

Hereinafter, each configuration will be described in order.

### (Positive electrode)

The positive electrode 110 has a positive electrode active material layer 111 and a positive electrode current collector 112.

The positive electrode active material layer 111 contains LiMO, which is one aspect of the present invention described above, and a solid electrolyte. In addition, the positive electrode active material layer 111 may contain a conductive material and a binder.

### (Solid electrolyte)

As the solid electrolyte which is contained in the positive electrode active material layer 111, a solid electrolyte that has lithium ion conductivity and is used in known all-solid-state lithium secondary batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples. As each electrolyte, the compounds described in WO 2020/208872A1, US2016/0233510A1, US2012/0251871A1, and US2018/0159169A1 are exemplary examples, and for example, the following compounds are exemplary examples.

### (Oxide-based solid electrolyte)

As the oxide-based solid electrolyte, for example, a perovskite-type oxide, a NASICON-type oxide, a LISICON-type oxide, a garnet-type oxide, and the like are exemplary examples. As specific examples of each oxide, the compounds described in WO 2020/208872A1, US2016/0233510A1, and US2020/0259213A1 are exemplary examples.

As the garnet-type oxide, Li-La-Zr-based oxides such as Li₇La₃Zr₂O₁₂ (also referred to as LLZ) are exemplary examples.

The oxide-based solid electrolyte may be a crystalline material or an amorphous material.

### (Sulfide-based solid electrolyte)

As the sulfide-based solid electrolyte, Li₂S-P₂S₅-based compounds, Li₂S-SiS₂-based compounds, Li₂S-GeS₂-based compounds, Li₂S-B₂S₃-based compounds, LiI-Si₂S-P₂S₅-based compounds, LiI-Li₂S-P₂O₅-based compounds, LiI-Li₃PO₄-P₂S₅-based compounds, Li₁₀GeP₂S₁₂, and the like can be exemplary examples.

In the present specification, the expression "-based compound" that indicates the sulfide-based solid electrolyte is used as a general term for solid electrolytes mainly containing the raw material written before "-based compound" such as "Li₂S" or "P₂S₅." For example, the Li₂S-P₂S₅-based compounds include solid electrolytes mainly containing Li₂S and P₂S₅ and further containing a different raw material. A proportion of Li₂S which is contained in the Li₂S-P₂S₅-based compound is, for example, 50 to 90 mass% with respect to the entire Li₂S-P₂S₅-based compound. A proportion of P₂S₅ which is contained in the Li₂S-P₂S₅-based compound is, for example, 10 to 50 mass% with respect to the entire Li₂S-P₂S₅-based compound. In addition, a proportion of the different raw material which is contained in the Li₂S-P₂S₅-based compound is, for example, 0 to 30 mass% with respect to the entire Li₂S-P₂S₅-based compound. In addition, the Li₂S-P₂S₅-based compounds also include solid electrolytes containing Li₂S and P₂S₅ in different mixing ratios.

As the Li₂S-P₂S₅-based compounds, Li₂S-P₂S₅, Li₂S-P₂S₅-LiI, Li₂S-P₂S₅-LiCl, Li₂S-P₂S₅-LiBr, Li₂S-P₂S₅-LiI-LiBr, and the like can be exemplary examples.

As the Li₂S-SiS₂-based compounds, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-SiS₂-P₂S₅-LiCl, and the like can be exemplary examples.

As the Li₂S-GeS₂-based compounds, Li₂S-GeS₂, Li₂S-GeS₂-P₂S₅, and the like can be exemplary examples.

The sulfide-based solid electrolyte may be a crystalline material or an amorphous material.

Two or more solid electrolytes can be jointly used as long as the effect of the invention is not impaired.

### (Conductive material and binder)

As the conductive material included in the positive electrode active material layer 111, the materials described in (Conductive material) above can be used. In addition, as the proportion of the conductive material in the positive electrode material mixture, the proportions described in (Conductive material) above can be applied in the same manner. In addition, as the binder included in the positive electrode, the materials described in (Binder) above can be used.

### (Positive electrode current collector)

As the positive electrode current collector 112 included in the positive electrode 110, the materials described in (Positive electrode current collector) above can be used.

As a method for supporting the positive electrode active material layer 111 with the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported with the positive electrode current collector 112 by preparing a paste of a mixture of the positive electrode active material, the solid electrolyte, the conductive material, and the binder using an organic solvent to produce a positive electrode material mixture, applying and drying the positive electrode material mixture to be obtained on at least one surface of the positive electrode current collector 112, and fixing the positive electrode material mixture by pressing.

In addition, the positive electrode active material layer 111 may be supported with the positive electrode current collector 112 by preparing a paste of a mixture of the positive electrode active material, the solid electrolyte, and the conductive material using an organic solvent to produce a positive electrode material mixture, applying and drying the obtained positive electrode material mixture on at least one surface of the positive electrode current collector 112, and calcining the positive electrode material mixture.

As the organic solvent which can be used for the positive electrode material mixture, the same organic solvent as the organic solvent which can be used in the case of preparing the paste of the positive electrode material mixture described in (Positive electrode current collector) above can be used.

As the method for applying the positive electrode material mixture on the positive electrode current collector 112, a slit die coating method, a screen coating method, a curtain coating method, a knife coating method, a gravure coating method, and an electrostatic spraying method are exemplary examples.

The positive electrode 110 can be produced by the method described above.

### (Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

### (Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a known method such that the negative electrode active material layer 121 comes into contact with the surface of the solid electrolyte layer 130.

In the lithium secondary battery configured as described above, since the above-described LiMO is used as the positive electrode active material, the cycle retention rate of the lithium secondary battery using this positive electrode active material can be improved.

In addition, since the positive electrode configured as described above has CAM having the above-described configuration, the cycle retention rate of the lithium secondary battery can be improved.

Furthermore, since the lithium secondary battery configured as described above has the above-described positive electrode, the secondary battery has a high cycle retention rate.

Another aspect of the present invention includes the following aspects.
[9] A lithium metal composite oxide having a layered structure, containing:
   Li;
   Ni; and
   an element X,
   in which the element X is at least one element selected from the group consisting of Co, Mn, Fe, Cu, Ti, Mg, Al, W, Mo, Nb, Zn, Sn, Zr, Ga, B, Si, S, and P,
   Ni/(Ni + X), which is a ratio of the number of moles of Ni to the total number of moles of Ni and the element X, is 0.8 or more and 0.98 or less, and
   in a powder X-ray diffraction measurement of the lithium metal composite oxide using CuKα rays, a diffraction peak is present within a range of a diffraction angle 20 = 18.7 ± 1°, and a relative standard deviation of a volume-based crystallite size distribution calculated from the diffraction peak within the range of 2θ = 18.7 ± 1° is 0.22 or more and 0.5 or less.
[10] The lithium metal composite oxide according to [9],
   in which, with regard to a crystallite size distribution function curve obtained from the diffraction peak, in which a horizontal axis is a volume-based crystallite size and a vertical axis is a probability density function of a crystallite with respect to the crystallite size, in a region surrounded by the crystallite size distribution function curve and the horizontal axis, a proportion of an area of a portion in the region in which the crystallite size is 1,000 Å or less to a total area of the region is 1.5% or more and 30% or less.
[11] The lithium metal composite oxide according to [9] or [10],
   in which the lithium metal composite oxide is represented by a composition formula (I),

      Li[Liₓ(Ni_{(1-y-z)}Co_{y}M_{z})₁₋ₓ]O₂ (I)
   and in the formula (I), M represents at least one element selected from the group consisting of Mn, Fe, Cu, Ti, Mg, Al, W, Mo, Nb, Zn, Sn, Zr, Ga, B, Si, S, and P, and -0.1 ≤ x ≤ 0.2, 0.05 ≤ y ≤ 0.13, 0.02 ≤ z ≤ 0.18, and y + z ≤ 0.22 are satisfied.
[12] The lithium metal composite oxide according to any one of [9] to [11],
   in which a 50% cumulative volume particle size D₅₀ which is obtained from a volume-based cumulative particle size distribution curve measured by a laser diffraction scattering method is 9 µm or more and 25 µm or less.
[13] The lithium metal composite oxide according to [12],
   in which a ratio of a 90% cumulative volume particle size D₉₀ to a 10% cumulative volume particle size D₁₀, which are obtained from the cumulative particle size distribution curve, is 2 or more and 3.5 or less.
[14] The lithium metal composite oxide according to any one of [9] to [13],
   in which a tap density is 1.8 g/cc or more and 3.2 g/cc or less.
[15] A positive electrode for a lithium secondary battery, including:
   a positive electrode active material containing the lithium metal composite oxide according to any one of [9] to [14].
[16] A lithium secondary battery including:
   the positive electrode for the lithium secondary battery according to [15].

### [Examples]

Hereinafter, the present invention will be described in detail with examples, but the present invention is not limited to the following description.

### <Composition analysis>

The composition analysis of LiMO to be produced by a method that will be described later was performed by the method of [Composition analysis] described above.

### <Volume-based crystallite size distribution>

The volume-based crystallite size distribution of LiMO was measured by the method of [Volume-based crystallite size distribution] described above.

### <Cumulative volume particle size>

The cumulative particle size distribution of each powder was measured by the method of [Cumulative volume particle size] described above.

### <Tap density>

The tap density of the LiMO powder was measured by the method of [Tap density] described above.

### <Production of positive electrode for lithium secondary battery>

A paste-like positive electrode material mixture was prepared by adding and kneading LiMO obtained by a production method to be described below, a conductive material (acetylene black), and a binder (PVdF) such that a composition of CAM:conductive material:binder = 92:5:3 (mass ratio) was achieved. During the preparation of the positive electrode material mixture, N-methyl-2-pyrrolidone was used as an organic solvent.

The obtained positive electrode material mixture was applied to an Al foil having a thickness of 40 µm, which served as a current collector, and dried in a vacuum at 150 °C for 8 hours, thereby obtaining a positive electrode for a lithium secondary battery. The electrode area of the positive electrode for a lithium secondary battery was set to 1.65 cm².

### <Production of negative electrode for lithium secondary battery>

Next, a paste-like negative electrode material mixture was prepared by adding and kneading artificial graphite (MAGD manufactured by Hitachi Kasei Co., Ltd.) as a negative electrode active material, sodium carboxymethylcellulose (CMC; manufactured by DKS Co. Ltd.) and styrene-butadiene rubber (SBR; manufactured by Nippon A & L Inc.) as binders in proportions at which a composition of negative electrode active material: CMC: SBR = 98:1:1 (mass ratio) was achieved. At the time of preparing the negative electrode material mixture, ion exchange water was used as a solvent.

The obtained negative electrode material mixture was applied to a Cu foil having a thickness of 12 µm, which served as a current collector, and dried in a vacuum at 60 °C for 8 hours, thereby obtaining a negative electrode for a lithium secondary battery. The electrode area of the negative electrode for a lithium secondary battery was set to 1.77 cm².

### <Production of lithium secondary battery (coin-type half cell)>

The above-described positive electrode for a lithium secondary battery was placed on a lower lid of a part of a coin type battery CR2032 (manufactured by Hohsen Corp.) with the aluminum foil surface facing downward, and a laminated film separator (thickness: 16 µm) having a heat-resistant porous layer laminated on a polyethylene porous film was placed on the positive electrode. An electrolyte solution (300 µl) was poured thereinto. As the electrolyte solution, a liquid prepared by dissolving LiPF₆ in a mixed solution of ethylene carbonate, dimethyl carbonate, and ethyl methyl carbonate in a volume ratio of 30:35:35 to 1 mol/l was used.

Lithium metal was used as a negative electrode, and the negative electrode was placed on the upper side of the laminated film separator. An upper lid was placed through a gasket and caulked using a caulking machine, thereby producing a lithium secondary battery (a coin-type half cell CR2032, which may be referred to hereinafter as a "coin-type half cell").

### <Initial charge and discharge efficiency>

Using the above-described coin-type half cell, an initial charge and discharge test was carried out under the conditions shown below, and the initial charge and discharge efficiency was measured.

### <Discharge rate test>

Test temperature: 25 °C
Maximum charging voltage: 4.3 V, charging time: 8 hours, charging current: 0.2 CA, constant current constant voltage charging
Minimum discharging voltage: 2.5 V, constant current discharge

### <Production of lithium secondary battery (coin-type full cell)>

The following operation was carried out in a glove box under an argon atmosphere.

The above-described positive electrode for a lithium secondary battery was placed on a lower lid of a part of a coin type battery CR2032 (manufactured by Hohsen Corp.) with the aluminum foil surface facing downward, and a laminated film separator (thickness: 16 µm) having a heat-resistant porous layer laminated on a polyethylene porous film was placed on the positive electrode. An electrolyte solution (300 µl) was poured thereinto. As the electrolyte solution, an liquid obtained by adding 1 vol% of vinylene carbonate to a mixed solution of ethylene carbonate, dimethyl carbonate, and ethyl methyl carbonate in 16:10:74 (volume ratio) and dissolving LiPF₆ in the liquid mixture at a concentration of 1.3 mol/l was used.

A graphite particle-coated electrode foil (weight of graphite particles with respect to the total weight of the coated electrode foil: 98%) was used as a negative electrode, and the negative electrode was placed on the upper side of the laminated film separator. An upper lid was placed through a gasket and caulked using a caulking machine, thereby producing a lithium secondary battery (a coin-type full cell CR2032, which may be referred to hereinafter as a "coin-type full cell").

Next, the coin-type full cell was subjected to the following formation step.

### [Formation step]

As the initial charge, constant current charging at 0.01 CA with an upper limit voltage of 3.5 V was performed and then constant current constant voltage charging at 0.05 CA with an upper limit voltage of 4.2 V was performed, and as the initial discharge, constant current discharge at 0.1 CA with a lower limit voltage of 2.5 V was performed. Following the initial charge and discharge, with an upper limit voltage of 4.2 V and a lower limit voltage of 2.5 V, two cycles of constant current constant voltage charge at 0.1 CA and constant current discharge at 0.1 CA were repeated, and three cycles of constant current constant voltage charge at 0.2 CA and constant current discharge at 0.2 CA were repeated.

### <DC resistance in low charged state>

Using the coin-type full cell after the above-described formation step, DC resistance in the low charged state was measured under the conditions shown below.

### <Experimental conditions>

### Test temperature: 25 °C

Pre-measurement treatment: discharge capacity at 1 CA in a voltage range of the upper limit voltage of 4.2 V and the lower limit voltage of 2.5 V was set as 100%, after being charged the coin cell to 4.2 V, being discharged at a constant current of 1 CA so that the remaining capacity of the coin cell was 20%. Furthermore, an open circuit voltage was measured while no current was applied to the coin cell after the pre-measurement treatment.

Measurement of DC resistance: constant currents of 2 mA, 4 mA, 8 mA, and 16 mA were applied to the coin cell after the pre-measurement treatment, a voltage value was measured 10 seconds after the start of current application, and a voltage drop ΔV with respect to the open circuit voltage was calculated. A DC resistance R of the coin cell was calculated from a linear function expression ΔV = R × ΔI of the voltage drop ΔV with respect to each current (ΔI).

### [Example 1]

After water was poured into a reaction vessel equipped with a stirrer and an overflow pipe, an aqueous solution of sodium hydroxide was added thereto, and the liquid temperature was retained at 40 °C.

A nickel sulfate aqueous solution and a cobalt sulfate aqueous solution were mixed so that the molar ratio of Ni and Co was 0.87:0.09 to prepare a mixed raw material solution 1. Furthermore, an aluminum sulfate aqueous solution was prepared as a raw material solution containing Al.

Next, the mixed raw material solution 1 and the aluminum sulfate aqueous solution were continuously charged into a reaction vessel with stirring so that the molar ratio of Ni, Co, and Al was 0.87:0.09:0.04, and an ammonium sulfate aqueous solution was continuously added thereto as a complexing agent. A sodium hydroxide aqueous solution was added dropwise thereto at appropriate times so that the pH of the solution in the reaction vessel reached 12.1 (measurement temperature: 40 °C) to obtain a reaction precipitate 1.

The reaction precipitate 1 was washed, dehydrated, dried, and sieved to obtain a metal composite hydroxide 1 containing Ni, Co, and Al. The 50% cumulative volume particle size D₅₀ of the metal composite hydroxide 1 was 14.1 µm.

The metal composite hydroxide 1 was retained and heated at 650 °C for 5 hours in an air atmosphere, and cooled to room temperature to obtain a metal composite oxide 1.

The metal composite oxide 1 was mixed with lithium hydroxide monohydrate so that the molar ratio Li/(Ni + Co + Al) of the amount of Li to the total amount 1 of Ni, Co, and Al contained in the metal composite oxide 1 was 1.03, thereby obtaining a mixture 1.

Next, the obtained mixture 1 was put into a rotating furnace tube of a rotary kiln. A heating zone of the furnace tube was set to 650 °C, and the furnace tube was heated so that a heating rate from a raw material inlet until the mixture 1 reached the heating zone exceeded 400 °C/hr. Thereafter, pre-calcination was performed by fluidized calcination involving maintaining a maximum temperature of 650 °C for 2 hours in an oxygen atmosphere, thereby obtaining a pre-calcined product 1.

After the pre-calcined product 1 was crushed, the product was put into a rotating furnace tube of the rotary kiln, the heating zone of the furnace tube was set to 790 °C, and main calcination was performed by heating the furnace tube so that a heating rate from a raw material inlet until the pre-calcined product 1 reached the heating zone exceeded 400 °C/hr. Thereafter, fluidized calcination involving maintaining a maximum temperature of 790 °C for 2 hours in an oxygen atmosphere was performed, thereby obtaining a calcined product 1.

A slurry produced by mixing the above-described calcined product 1 and pure water adjusted to a liquid temperature of 5 °C so that the proportion of the calcined product weight to the total amount was 0.5 was stirred for 20 minutes, dehydrated, heat-treated at 250 °C, and dried to remove moisture remaining after the dehydration, thereby obtaining LiMO 1 having a layered structure. Results of the composition analysis of LiMO 1 were Ni(Ni + X) = 0.87 and Li/(Ni + Co + Al) = 0.99, and in the composition formula (I), x = -0.003, y = 0.094, and z = 0.034.

### [Comparative Example 1]

The mixture 1 obtained in the process of Example 1 was filled into an alumina sagger, and put into a static batch-type calcining furnace. The heating rate was set to 300 °C/hr, and pre-calcination was performed by maintaining 650 °C for 2 hours in an oxygen atmosphere to obtain a pre-calcined product C1.

After crushing the pre-calcined product C1, the crushed pre-calcined product C1 was filled into an alumina sagger, and put into a static batch-type calcining furnace. The heating rate was set to 300 °C/hr, and main calcination was performed by maintaining a maximum temperature of 720 °C for 2 hours in an oxygen atmosphere to obtain a calcined product C1.

A slurry produced by mixing the above-described calcined product C1 and pure water adjusted to a liquid temperature of 5 °C so that the proportion of the calcined product weight to the total amount was 0.5 was stirred for 20 minutes, dehydrated, heat-treated at 250 °C, and dried to remove moisture remaining after the dehydration, thereby obtaining LiMO C1 having a layered structure. Result of the composition analysis of LiMO C1 were Ni(Ni + X) = 0.87 and Li/(Ni + Co + Al) = 1.00, and in the composition formula (I), x = -0.001, y = 0.093, and z = 0.038.

### [Example 2]

After water was poured into a reaction vessel equipped with a stirrer and an overflow pipe, a sodium hydroxide aqueous solution was added thereto, and the liquid temperature was maintained at 50 °C.

A nickel sulfate aqueous solution and a cobalt sulfate aqueous solution were mixed so that the molar ratio of Ni and Co was 0.88:0.09 to prepare a mixed raw material solution 2. Furthermore, an aluminum sulfate aqueous solution was prepared as a raw material solution containing Al.

Next, the mixed raw material solution 2 and the aluminum sulfate aqueous solution were continuously charged into a reaction vessel with stirring so that the molar ratio of Ni, Co, and Al was 0.88:0.09:0.03, and an ammonium sulfate aqueous solution was continuously added thereto as a complexing agent. A sodium hydroxide aqueous solution was added dropwise thereto at appropriate times so that the pH of the solution in the reaction vessel reached 11.7 (measurement temperature: 40 °C) to obtain a reaction precipitate 2.

The reaction precipitate 2 was washed, dehydrated, dried, and sieved to obtain a metal composite hydroxide 2 containing Ni, Co, and Al. The 50% cumulative volume particle size D₅₀ of the metal composite hydroxide 2 was 12.6 µm.

The metal composite oxide 2 was mixed with lithium hydroxide monohydrate so that the molar ratio Li/(Ni + Co + Al) of the amount of Li to the total amount 1 of Ni, Co, and Al contained in the metal composite oxide 2 was 1.10, thereby obtaining a mixture 2.

Next, the obtained mixture 2 was put into a rotating furnace tube of a rotary kiln. The heating zone of the furnace tube was set to 670 °C, and the furnace tube was heated so that a heating rate from a raw material inlet until the mixture 2 reached the heating zone exceeded 400 °C/hr. Thereafter, pre-calcination involving maintaining a maximum temperature of 670 °C for 2 hours in an oxygen atmosphere was performed, thereby obtaining a pre-calcined product 2.

After the pre-calcined product 2 was crushed, the crushed pre-calcined product 2 was put into the rotating furnace tube of the rotary kiln. The heating zone of the furnace tube was set to 760 °C, and the furnace tube was heated so that a heating rate from a raw material inlet until the pre-calcined product 2 reached the heating zone exceeded 400 °C/hr. Thereafter, pre-calcination involving maintaining a maximum temperature of 760 °C for 2 hours in an oxygen atmosphere was performed, thereby obtaining a calcined product 2.

A slurry produced by mixing the above-described calcined product 2 and pure water adjusted to a liquid temperature of 5 °C so that the proportion of the calcined product weight to the total amount was 0.3 was stirred for 20 minutes, dehydrated, heat-treated at 250 °C, and dried to remove moisture remaining after the dehydration, thereby obtaining LiMO 2 having a layered structure. Results of the composition analysis of LiMO 2 were Ni(Ni + X) = 0.89 and Li/(Ni + Co + Al) = 1.03, and in the composition formula (I), x = 0.013, y = 0.088, and z = 0.020.

### [Example 3]

LiMO 3 having a layered structure was obtained by the same procedure as in Example 2, except that the set temperature of the heating zone and the maximum temperature in the main calcination were set to 720 °C. Results of the composition analysis of LiMO 3 were Ni(Ni + X) = 0.89 and Li/(Ni + Co + Al) = 1.05, and in the composition formula (I), x = 0.025, y = 0.088, and z = 0.023.

### [Comparative Example 2]

The mixture 2 obtained in the process of Example 2 was filled into an alumina sagger, and put into a static batch-type calcining furnace. The heating rate was set to 300 °C/hr, and pre-calcination was performed by maintaining a maximum temperature of 650 °C for 5 hours in an oxygen atmosphere to obtain a pre-calcined product C2.

After crushing the pre-calcined product C2, the crushed pre-calcined product C2 was filled into an alumina sagger, and put into a static batch-type calcining furnace. The heating rate was set to 300 °C/hr, and first main calcination was performed by maintaining a maximum temperature of 790 °C for 2 hours in an oxygen atmosphere to obtain a pre-calcined product C2-1. After crushing the pre-calcined product C2-1, the crushed pre-calcined product C2-1 was filled into an alumina sagger, and put into a static batch-type calcining furnace. The heating rate was set to 300 °C/hr, and second main calcination was performed by maintaining a maximum temperature of 790 °C for 9 hours in an oxygen atmosphere to obtain a calcined product C2.

A slurry produced by mixing the above-described calcined product C2 and pure water adjusted to a liquid temperature of 5 °C so that the proportion of the calcined product weight to the total amount was 0.3 was stirred for 20 minutes, dehydrated, heat-treated at 250 °C, and dried to remove moisture remaining after the dehydration, thereby obtaining LiMO C2. Results of the composition analysis of LiMO C2 were Ni(Ni + X) = 0.89 and Li/(Ni + Co + Al) = 0.99, and in the composition formula (I), x = -0.003, y = 0.089, and z = 0.025.

### [Comparative Example 3]

After water was poured into a reaction vessel equipped with a stirrer and an overflow pipe, a sodium hydroxide aqueous solution was added thereto, and the liquid temperature was maintained at 50 °C.

A nickel sulfate aqueous solution, a cobalt sulfate aqueous solution, and a manganese sulfate aqueous solution were mixed so that the atomic ratio of Ni, Co, and Mn was 0.60:0.20:0.20, thereby preparing a mixed raw material solution C3.

Next, the mixed raw material solution 3 and an ammonium sulfate aqueous solution as a complexing agent were continuously added to the reaction vessel under stirring. A sodium hydroxide aqueous solution was added dropwise thereto at appropriate times so that the pH of the solution in the reaction vessel reached 11.7 (measurement temperature: 40 °C) to obtain a reaction precipitate C3.

The reaction precipitate C3 was washed, dehydrated, dried, and sieved to obtain a metal composite hydroxide C3 containing Ni, Co and Mn. The 50% cumulative volume particle size D₅₀ of the metal composite hydroxide C3 was 12.6 µm.

The metal composite hydroxide C3 was mixed with lithium carbonate so that the molar ratio Li/(Ni + Co + Mn) of the amount of Li to the total amount 1 of Ni, Co, and Mn contained in the metal composite oxide C3 was 1.06, thereby obtaining a mixture C3.

The mixture C3 was filled into an alumina sagger, and put into a static batch-type calcining furnace. The heating rate was set to 300 °C/hr, and pre-calcination was performed by maintaining a maximum temperature of 650 °C for 5 hours in an air atmosphere to obtain a pre-calcined product C3. After crushing the pre-calcined product C3, the crushed pre-calcined product C3 was filled into an alumina sagger, and put into a static batch-type calcining furnace. The heating rate was set to 300 °C/hr, and main calcination was performed by maintaining a maximum temperature of 790 °C for 2 hours in an air atmosphere to obtain a calcined product C3.

A slurry produced by mixing the above-described calcined product C3 and pure water adjusted to a liquid temperature of 5 °C so that the proportion of the calcined product weight to the total amount was 0.5 was stirred for 20 minutes, dehydrated, heat-treated at 250 °C, and dried to remove moisture remaining after the dehydration, thereby obtaining LiMO C3. Results of the composition analysis of LiMO C3 were Ni(Ni + X) = 0.60 and Li/(Ni + Co + Mn) = 1.04, and in the composition formula (I), x = 0.017, y = 0.198, and z = 0.199.

LiMO 1 to LiMO 3 of Examples 1 to 3 and LiMO C1 to LiMO C3 of Comparative Examples 1 to 3 had a diffraction peak within a range of a diffraction angle 20 = 18.7 ± 1°.

With regard to LiMO 1 to LiMO 3 of Examples 1 to 3 and LiMO C1 to LiMO C3 of Comparative Examples 1 to 3, the production conditions; Ni/(Ni + X); the relative standard deviation of the volume-based crystallite size distribution; the proportion of an area of a portion in a region surrounded by the crystallite size distribution function curve and the horizontal axis, in which the crystallite size is 1,000 Å or less, to the total area of the region (in the table, referred to as "Area ratio of distribution function curve with crystallite size of 1000 Å or less"); D₁₀; D₅₀; D₉₀; D₉₀/D₁₀; the tap density; the initial charge and discharge efficiency of the coin-type half cell using each LiMO; and the DC resistance of the coin-type full cell in the low charged state are shown in Table 1. The crystallite size distribution function curves of Example 1 and Comparative Examples 1 and 2 are shown in FIG. 1.

**[Table 1]**

| | | Example 1 | Example 2 | Example 3 | Comparative Example 1 | Comparative Example 2 | Comparative Example 3 |
|---|---|---|---|---|---|---|---|
| Pre-calcination condition | Maximum temperature/ retention time | 650 °C/2 h | 670 °C/2 h | 670 °C/2 h | 650 °C/2 h | 650 °C/2 h | 650 °C/2 h |
| | Calcination equipment | Rotary kiln | Rotary kiln | Rotary kiln | Batch furnace | Batch furnace | Batch furnace |
| First main-calcination condition | Maximum temperature/ retention time | 790 °C/2 h | 760 °C/2 h | 720 °C/2 h | 720 °C/2 h | 720 °C/2 h | 790 °C/2 h |
| | Calcination equipment | Rotary kiln | Rotary kiln | Rotary kiln | Batch furnace | Batch furnace | Batch furnace |
| Second main-calcination condition | Maximum temperature/ retention time | - | - | - | - | 790 °C/6 h | - |
| | Calcination equipment | - | - | - | - | Batch furnace | - |
| Compositional ratio | - | Ni:Co:Al = 87:9:4 | Ni:Co:Al = 88:9:3 | Ni:Co:Al = 88:9:3 | Ni:Co:Al = 87:9:4 | Ni:Co:Al = 88:9:3 | Ni:Co:Mn = 60:20:20 |
| Ni/(Ni + X) | | 0.87 | 0.89 | 0.89 | 0.87 | 0.89 | 0.60 |
| Relative standard deviation of crystallite size distribution | - | 0.35 | 0.31 | 0.44 | 0.61 | 0.08 | 0.67 |
| Area ratio of distribution function curve with crystallite size of 1000 Å or less | (%) | 12 | 2 | 28 | 54 | Less than 0.1% | 77 |
| D₅₀ | (µm) | 15.8 | 12.6 | 12.8 | 12.0 | 17.6 | 13.4 |
| D₁₀ | (µm) | 8.9 | 8.1 | 7.9 | 8.1 | 11.2 | 8.0 |
| D₉₀ | (µm) | 27.6 | 19.2 | 19.1 | 18.4 | 27.7 | 22.3 |
| D₉₀/D₁₀ | - | 3.1 | 2.4 | 2.4 | 2.3 | 2.5 | 2.8 |
| Tap density | (g/cc) | 2.43 | 2.72 | 2.81 | 2.53 | 2.01 | 2.63 |
| Initial charge and discharge efficiency | (%) | 87.5 | 88.6 | 88.8 | 86.1 | 84.0 | 88.7 |
| DC resistance in low charged state | (Ω) | 19 | 17 | 19 | 49 | 53 | 29 |

As Examples 1 to 3 shown in Table 1, in a case where Ni/(Ni + X) of LiMO was 0.7 or more and the relative standard deviation of the volume-based crystallite size distribution was 0.20 or more and 0.55 or less, the initial charge and discharge efficiency of the coin-type half cell was as high as 87.5% or more, and the DC resistance of the coin-type full cell in the low charged state was as low as 19 Ω or less.

On the other hand, in Comparative Examples 1 and 2 in which the relative standard deviation of the volume-based crystallite size distribution of LiMO was outside the above-described range, the initial charge and discharge efficiency of the coin-type half cell was 86.1% or less. In addition, the DC resistance of the coin-type full cell in the low charged state was 49 Ω or more. In Comparative Example 3 in which Ni/(Ni + X) of LiMO was outside the above-described range, the DC resistance of the coin-type full cell in the low charged state was 29 Ω.

### [Industrial Applicability]

According to the present invention, it is possible to provide LiMO that when used as CAM enables a lithium secondary battery having a high initial charge and discharge efficiency and a low DC resistance in a low charged state to be achieved; and a positive electrode for a lithium secondary battery and a lithium secondary battery including the same.

### [Reference Signs List]

1: Separator
2: Positive electrode
3: Negative electrode
4: Electrode group
5: Battery can
6: Electrolyte solution
7: Top insulator
8: Sealing body
10: Lithium secondary battery
21: Positive electrode lead
31: Negative electrode lead
100: Laminate
110: Positive electrode
111: Positive electrode active material layer
112: Positive electrode current collector
113: External terminal
120: Negative electrode
121: Negative electrode active material layer
122: Negative electrode current collector
123: External terminal
130: Solid electrolyte layer
200: Exterior body
200a: Opening portion
1000: All-solid-state lithium secondary battery

## Claims

1. A lithium metal composite oxide having a layered structure, comprising:
Li;
Ni; and
an element X,
wherein the element X is at least one element selected from the group consisting of Co, Mn, Fe, Cu, Ti, Mg, Al, W, Mo, Nb, Zn, Sn, Zr, Ga, B, Si, S, and P,
Ni/(Ni + X), which is a ratio of the number of moles of Ni to the total number of moles of Ni and the element X, is 0.7 or more, and
in a powder X-ray diffraction measurement of the lithium metal composite oxide using CuKa rays, a diffraction peak is present within a range of a diffraction angle 20 = 18.7 ± 1°, and a relative standard deviation of a volume-based crystallite size distribution calculated from the diffraction peak within the range of 2θ = 18.7 ± 1° is 0.20 or more and 0.55 or less.

2. The lithium metal composite oxide according to Claim 1,
wherein, with regard to a crystallite size distribution function curve obtained from the diffraction peak, in which a horizontal axis is a volume-based crystallite size and a vertical axis is a probability density function of a crystallite with respect to the crystallite size, in a region surrounded by the crystallite size distribution function curve and the horizontal axis, a proportion of an area of a portion in the region in which the crystallite size is 1,000 Å or less to a total area of the region is 0.5% or more and 50% or less.

3. The lithium metal composite oxide according to Claim 1 or 2,
wherein the lithium metal composite oxide is represented by a composition formula (I),
Li[Liₓ(Ni_{(1-y-z)}Co_{y}M_{z})₁₋ₓ]O₂ (I)
and in the formula (I), M represents at least one element selected from the group consisting of Mn, Fe, Cu, Ti, Mg, Al, W, Mo, Nb, Zn, Sn, Zr, Ga, B, Si, S, and P, and -0.1 ≤ x ≤ 0.2, 0 < y ≤ 0.2, 0 < z ≤ 0.2, and y + z ≤ 0.3 are satisfied.

4. The lithium metal composite oxide according to any one of Claims 1 to 3,
wherein a 50% cumulative volume particle size D₅₀ which is obtained from a volume-based cumulative particle size distribution curve measured by a laser diffraction scattering method is 5 µm or more and 30 µm or less.

5. The lithium metal composite oxide according to Claim 4,
wherein a ratio of a 90% cumulative volume particle size D₉₀ to a 10% cumulative volume particle size D₁₀, which are obtained from the cumulative particle size distribution curve, is 1.5 or more and 4 or less.

6. The lithium metal composite oxide according to any one of Claims 1 to 5,
wherein a tap density is 1.8 g/cc or more and 3.2 g/cc or less.

7. A positive electrode for a lithium secondary battery, comprising:
a positive electrode active material containing the lithium metal composite oxide according to any one of Claims 1 to 6.

8. A lithium secondary battery comprising:
the positive electrode for the lithium secondary battery according to Claim 7.
